# EUROPÄISCHE PATENTSCHRIFT

(11) **EP 2 749 798 B1**
(45) Veröffentlichungstag und Bekanntmachung des Hinweises auf die Patenterteilung: **02.03.2016**
(21) Anmeldenummer: 12199489.1
(22) Anmeldetag: 27.12.2012
(51) Int. Cl.: F16K 3/18, F16K 51/02

(54) **Vakuumschieberventil**
Vacuum slide valve
Soupape à coulisse à vide

(43) Veröffentlichungstag der Anmeldung: 02.07.2014
(73) Patentinhaber: VAT Holding AG, 9469 Haag (CH)
(72) Erfinder: Blecha, Thomas, 6800 Feldkirch (AT)
(74) Vertreter: Allwardt, Anke

(56) Entgegenhaltungen:
- DE-A1-102008 049 353
- JP-A- 2005 147 213

## Beschreibung

Die Erfindung betrifft ein Vakuumschieberventil nach dem Oberbegriff des Anspruchs 1.

Allgemein sind Vakuumventile zum im Wesentlichen gasdichten Schliessen eines Fliesswegs, der durch eine in einem Ventilgehäuse ausgeformte Öffnung führt, in unterschiedlichen Ausführungsformen aus dem Stand der Technik bekannt. Vakuumschieberventile kommen insbesondere im Bereich der IC-und Halbleiterfertigung, die in einer geschützten Atmosphäre möglichst ohne das Vorhandensein verunreinigender Partikel stattfinden muss, zum Einsatz. Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozesskammern, in denen die innerhalb der Prozesskammer befindlichen Halbleiterelemente mittels jeweils einer Bearbeitungsvorrichtung bearbeitet werden. Sowohl während des Bearbeitungsprozesses innerhalb der Prozesskammer, als auch während des Transports von Prozesskammer zu Prozesskammer müssen sich die hochsensiblen Halbleiterelemente stets in geschützter Atmosphäre - insbesondere im Vakuum - befinden. Die Prozesskammern sind beispielsweise über Verbindungsgänge miteinander verbunden, wobei die Prozesskammern mittels Vakuumschieberventile zum Transfer der Teile von der einen zur nächsten Prozesskammer geöffnet und im Anschluss zur Durchführung des jeweiligen Fertigungsschritts gasdicht verschlossen werden können. Derartige Ventile werden aufgrund des beschriebenen Anwendungsgebiets auch als Vakuum-Transferventile und aufgrund ihres rechteckigen Öffnungsquerschnitts auch als Rechteckschieber bezeichnet.

Da Transferventile unter anderem bei der Herstellung hochsensibler Halbleiterelemente zum Einsatz kommen, muss die insbesondere durch die Betätigung des Ventils verursachte Partikelgenerierung und die Anzahl der freien Partikel im Vakuumbereich des Ventilraums möglichst gering gehalten werden. Die Partikelgenerierung ist primär eine Folge von Reibung beispielsweise durch Metall-Metall-Kontakt und durch Abrasion.

Die Abdichtung kann z.B. entweder über eine auf der Verschlussseite des Verschlusstellers angeordnete Dichtung, die auf den die Öffnung umlaufenden Ventilsitz gepresst wird, erfolgen, oder über einen Dichtungsring auf dem Ventilsitz, gegen den die Verschlussseite des Verschlusstellers gedrückt wird. Unterschiedliche Dichtvorrichtungen sind aus dem Stand der Technik bekannt, beispielsweise aus der US 6,629,6.82 B2 (Duelli). Ein geeignetes. Material für Dichtungsringe ist beispielsweise das unter dem Handelsnamen Viton® bekannte elastische Dichtungsmaterial.

Die Anforderungen an die bei Vakuumventilen zum Einsatz kommenden Dichtungen sind sehr hoch. Einerseits muss im geschlossenen Zustand des Ventils die Dichtigkeit des Ventils gewährleistet sein. Dies ist vor allem aufgrund der im Vakuumbereichs hohen Differenzdrücke und der somit auftretenden grossen Kräfte, die auf den Ventilverschluss wirken, eine grosse Herausforderung. Da die zum Einsatz kommenden Dichtungen bei übermässig hohen Verpressungen einem überdurchschnittlichen hohen Verschleiss unterliegen oder zerstört werden, muss der Aufbau des Ventils derart sein, dass die Differenzdruckkräfte nicht oder nur begrenzt auf die Dichtungen wirken können. Die Verpressung der Dichtung sollte entlang ihres Verlaufs möglichst gleichmässig erfolgen, was eine gleichmässige Anpresskraft des Veritiltellers auf den Ventilsitz im gesamten Berührungsbereich erfordert. Vor allem sind Querbelastungen und Längsbelastungen auf die Dichtung möglichst gering zu halten. Bei Querbelastungen quer zu der Längsrichtung der Dichtung besteht bei O-Ring-Dichtungen die Gefahr, dass sie aus ihrer Halterung, insbesondere der Nut, in welcher sie fixiert sind, gerissen werden. Auch aufvulkanisierte Dichtungen dürfen nur sehr begrenzten Querkräften ausgesetzt werden. Sowohl im geöffneten als auch geschlossenen Zustand des Ventils sind die Dichtungen zum Teil aggressiven Medien ausgesetzt und müssen daher entweder derart beschaffen sein, dass sie den Einflüssen standhalten können, und/oder aus dem Fliessweg des Mediums, auch zur Vermeidung von Abrasion, herausbewegt werden. Ein übermässig hoher Verschleiss der Dichtung stellt einen Unsicherheitsfaktor für die Prozesssicherheit dar und erfordert einen regelmässigen Austausch der Dichtung, was wiederum zu erhöhten Stillstandszeiten im Prozess führt.

Unterschiedliche Ausführungsformen von Vakuumventilen, insbesondere deren Antriebstechnologien, sind aus dem Stand der Technik bekannt, welche unter anderem als Ziel die Erhöhung der Lebensdauer der eingesetzten Dichtungen sowie eine verbesserte Prozesssicherheit haben.

Abhängig von den jeweiligen Antriebstechnologien wird insbesondere zwischen Schieberventilen, auch Ventilschieber oder Rechteckschieber genannt, und Pendelventilen unterschieden, wobei das Schliessen und Öffnen im Stand der Technik meistens in zwei Schritten erfolgt. In einem ersten Schritt wird ein Ventilverschlussglied, insbesondere ein Verschlussteller, im Falle eines Schieberventils, wie beispielsweise aus der US 6,416,037 (Geiser) oder der US 6,056,266 (Blecha) bekannt, insbesondere des L-Typs, linear über eine Öffnung im Wesentlichen parallel zum Ventilsitz verschoben oder im Falle eines Pendelventils, wie beispielsweise aus der US 6,089,537 (Olmsted) bekannt, um eine Schwenkachse über die Öffnung geschwenkt, ohne dass hierbei eine Berührung zwischen dem Verschlussteller und dem Ventilsitz des Ventilgehäuses stattfindet. In einem zweiten Schritt wird der Verschlussteller mit dessen Verschlussseite auf den Ventilsitz des Ventilgehäuses gedrückt, so dass die Öffnung gasdicht verschlossen wird.

Die beschriebene zweistufige Bewegung, bei welcher das Verschlussglied zuerst quer über die Öffnung geschoben wird, ohne dass es zu einer Berügung der Dichtung mit dem Ventilsitz kommt, und das Verschlussglied im Anschluss im Wesentlichen senkrecht auf den Ventilsitz gedrückt wird, hat neben der Möglichkeit einer präzisen Regelung des Durchflusses vor allem den Vorteil, dass die Dichtung nahezu ausschliesslich senkrecht verpresst wird, ohne dass es zu einer Quer- oder Längsbelastung der Dichtung kommt. Nachteilig ist jedoch der verhältnismässig komplexe Aufbau des Antriebs, der insbesondere entweder von einem einzigen Antrieb, der eine L-förmige Bewegung des Verschlussglieds ermöglicht, oder von einer Mehrzahl an Antrieben, beispielsweise zwei Linearantrieben oder einem Linear- und einem Spreizantrieb, gebildet wird. Spreizantriebe, welche meist unmittelbar hinter dem Verschlussteller angeordnet sind und diesen relativ zu dem Schaft, auf welchem sie sich befinden, in senkrechter Richtung auf den Ventilsitz verstellen, haben ausserdem den Nachteil, dass eine Vielzahl an mechanischen Teilen, welche zueinander Relativbewegungen ausführen, im Ventilinneren - also im hochsensiblen Vakuumbereich des Ventils - angeordnet sind. Dies erhöht zu einen die Komplexität des Aufbaus und zum anderen die Erzeugung von prozessschädigenden Reibpartikeln. Ein weiterer Nachteil der mehrstufigen Bewegung ist die begrenzte Verstellgeschwindigkeit des Verschlussglieds zwischen dem vollständig geöffneten und dem vollständig geschlossenen Zustand. Keilventile, die lediglich linear verstellt werden, ermöglichen zwar eine hohe Verstellgeschwindigkeit, sie eignen sich jedoch aufgrund der Querbeanspruchung der Dichtung nur bedingt für den Einsatz als Hauptdichtung im Vakuumbereich, und wenn doch, dann für nur wenige Verstellzyklen.

Die in zwei Schritten erfolgende Schliessbewegung eines Schieberventils kann mittels unterschiedlicher Mechanismen erreicht werden. Der beispielsweise an zwei Schubstangen montierte Verschlussteller ist über die Schubstangen mit einem Antriebsmechanismus verbunden, der durch eine im Wesentlichen lineare Bewegung entlang der Schubstangenachse ein Verschieben des Verschlusstellers im Wesentlichen parallel über die zu verschliessende Öffnung ermöglicht. Mittels desselben Antriebsmechanismus ist es möglich, durch Schwenken der Schubstangen den Verschlussteller, welcher sich nun in beabstandeter Gegenüberlage zur Öffnung und im Wesentlichen parallel zum Ventilsitz befindet, in Richtung des Ventilsitzes zu schwenken und im Wesentlichen senkrecht auf den Ventilsitz zu drücken. Anstelle zweier Schubstangen kann auch nur eine Schubstange zum Einsatz kommen. Die Verwendung von mehr als zwei Schubstangen ist ebenfalls möglich. Aus dem Stand der Technik sind unterschiedliche Arten von derartigen Antriebsmechanismen bekannt, die jeweils einen geringfügig anderen Verstellweg der Schubstange und somit des Verschlusstellers zur Folge haben können. So kann beispielsweise anstatt eines bogenförmigen Schwenkens des Verschlusstellers auf den Ventilsitz eine absolut lineare Bewegung des Verschlusstellers senkrecht zum Ventilsitz eingeleitet werden. Antriebsmechanismen, welche sowohl ein in Wesentlichen lineares Verschieben des Verschlusstellers über die Öffnung und ein im Wesentlichen senkrechtes Anpressen des Verschlusstellers auf den die Öffnung umlaufenden Ventilsitz ermöglichen, sind beispielsweise aus der US 6,431,518 B1, US 5,415,376 A, US 5,641,149 A, US 6,045,117 A, US 5, 934, 646 A, US 5,755,255 A, US 6, 082, 706, US, 6, 095, 180 und US 6,629,682 B2 bekannt.

Der zweistufige Bewegungsablauf kann jedoch auch mittels mehrerer getrennter Antriebsmechanismen erzielt werden. Beispielsweise in der US 6,056,266 (Blecha) und der US 6,561,484 (Nakagawa) werden Schieberventile beschrieben, deren Schubstangen lediglich entlang der Schubstangenachse linear verstellbar sind, wodurch der Verschlussteller parallel über die Öffnung geschoben werden kann, ohne dass es zu einer Berührung zwischen dem Verschlussteller und dem Ventilsitz kommt. Der Antriebsmechanismus kann in diesem Fall von einem einfachen Linearbewegungsantrieb, beispielsweise einem Zylinderantrieb, gebildet werden. Das Anpressen des Verschlusstellers auf den Ventilsitz wird durch einen gesonderten Antrieb im zweigeteilten Verschlussteller oder zwischen dem Verschlussteller und der Schubstange erreicht. Dieser gesonderte Antrieb ist insbesondere als Zylinderantrieb ausgebildet, mittels welchem die Verschlussseite des Verschlusstellers geradlinig senkrecht auf den Ventilsitz gedrückt werden kann, wie in der US 6,056,266 (Blecha) gezeigt.

Ein ähnliches Vakuumventil wird in der DE 10 2007 030 006 A1 gezeigt. Zur Verschiebung der Ventilstange in ihre Längsrichtung dient eine Kolben-Zylinder-Einheit, die gegenüber dem Ventilgehäuse in eine Richtung quer zur Längsachse der Ventilstange als Ganzes parallel verschiebbar gelagert ist. Zur Parallelverschiebung dient eine ebenfalls ausserhalb des Vakuumbereichs angeordnete weitere Kolben-Zylinder-Einheit.

In der DE 10 2008 049 353 A1 (Ehrne, Blecha) wird ein Vakuumventil beschrieben, dessen Ventilstange aus dem Vakuumbereich hinausgeführt und ausserhalb des Vakuumbereichs sowohl mit einer Längsantriebseinrichtung, als auch mit einer separaten Querantriebseinrichtung sowie einer Lagereinheit verbunden ist.

Bei dem aus der WO 2010/034046 A1 bekannten Vakuumventil erfolgt zum Schliessen des Vakuumventils zunächst eine Verschiebung der Ventilstange in Richtung ihrer Längsachse und im Anschluss eine Parallelverschiebung der Ventilstange quer zu ihrer Längsachse. Hierzu ist die Ventilstange von einer ausserhalb des Vakuumbereichs angeordneten Lagereinheit in Richtung ihrer Längsachse verschiebbar gelagert. Die Lagereinheit kann gemeinsam mit der Ventilstange quer hierzu verschoben werden. Zu diesem Zweck dienen Kolben-Zylinder-Einheiten, die in diese Querrichtung wirken. Bei anderen Ausführungsbeispielen wirken die Kolben-Zylinder-Einheiten in Richtung der Längsachse der Ventilstange, wobei die Querbewegung der Lagereinheit mittels Lenkern erzeugt wird, die eine Parallelogrammführung bilden.

Aus der US 6,561,483 (Nakagawa) und der US 6,561,484 (Nakagawa et al.) sind Schieberventile in unterschiedlichen Ausführungsformen bekannt, die einen zweigeteilten Verschlussteller umfassen. Ein erster Tellerabschnitt besitzt eine Öffnung. Ein zweiter Tellerabschnitt ist mittels eines dehnbaren Körpers mit dem ersten Tellerabschnitt verbunden. Ein Aktuator ist zwischen dem ersten und dem zweiten Tellerabschnitt angeordnet, sodass die beiden Tellerabschnitte aktiv aufeinander zu und voneinander weg bewegt werden können. Der dehnbare Körper ist als ein Faltenbalg ausgebildet. Der erste Tellerabschnitt ist mittels des Aktuators gegen den Ventilsitz anpressbar, wobei sich der zweite Tellerabschnitt - insbesondere im Falle eines ventilsitzseitigen Überdrucks - gegebenenfalls auf einer gegenüberliegenden Ventilgehäuseseite abstützt. Da sich Antriebselemente innerhalb des hochsensiblen Vakuumbereichs befinden, ist die Gefahr von allfälligen Verunreinigungen durch Reibpartikel, welche durch den direkt am Ventilteller angeordneten Antrieb verursacht werden können, verhältnismässig gross, weshalb besondere Abdichtungsmassnahmen getroffen werden müssen. Eine derartige Abdichtung stellt beispielsweise ein Faltenbalg dar. Der Aufbau derartiger Vakuumventile mit Antrieben im Verschlussteller ist vor allem aufgrund der Notwendigkeit des Verwendens dieser Zusatzabdichtung, insbesondere des Faltenbalgs oder mehrerer Abdichtringe zur Abdichtung des ersten Tellerabschnitts zum zweiten Tellerabschnitt und zum Ventilsitz verhältnismässig komplex, ungünstig zu warten und anfällig für Verschmutzungen.

Aus der US 5,769,952 (Komino) ist ein als Vakuum-Transferventil ausgebildetes Schieberventil bekannt, das sich im Wesentlichen aus einem Linearverstellantrieb, einer entlang ihrer Schubstangenachse linear verschiebbaren Schubstange und einem Verschlussteil zusammensetzt. Das Verschlussteil ist über zwei Schenkel mit der Schubstange verbunden. Durch Verstellen der Schubstange linear entlang der Schubstangenachse in Schliessrichtung kann das Verschlussteil parallel über die Ventilöffnung verschoben werden, wobei sich das Ventilteil in beanstandeter Gegenüberlage zum Ventilsitz, welcher die Öffnung umgibt, befindet. Die beiden Schenkel sind jeweils einenends an einer sich quer zur Schubstange ersteckenden und parallel zur Ventilsitzebene verlaufenden Querstange und jeweils anderenends an dem Verschlussteil schwenkbar gelagert. Beide Schenkel sind in Richtung der Querstange parallel zueinander angeordnet und haben seitens des Verschlussteils und seitens der Querstange jeweils eine gemeinsame geometrische Schwenkachse. Die Schenkel halten das Verschlussteil derart, dass sich die querstangenseitige geometrische Schwenkachse in Bezug auf die Schliessrichtung der lineare Verstellrichtung der Schubstange unterhalb der verschlussteilseitigen Schwenkachse befindet, so dass eine entgegen der Schliessrichtung der Schubstange wirkende Kraft auf das Verschlussteil zu einer Verringerung des Abstandes der beiden Schwenkachsen in Bezug auf die Schliessrichtung führt. Am Ende des linearen Verstellwegs des Verschlussteils ist eine Führungsrolle angeordnet. Kommt es zu einem Kontakt zwischen dem Verschlussteil und der Führungsrolle, kann das Verschlussteil nicht mehr weiter in Schliessrichtung verstellt werden. Der Linearverstellantrieb übt jedoch weiterhin eine Kraft auf das Verschlussteil auf, so dass die Schenkel ausschwenken, sich somit der senkrechten Stellung zur linearen Verstellrichtung nähern und als Hebel wirken. Das Verschlussteil wird hierdurch in Richtung zum Ventilsitz verstellt und auf diesen gedrückt. Ein Vorteil eines derartigen Schieberventils ist der relativ einfach aufgebaute Antrieb, da die Schubstange nur linear verschoben werden muss. Aufgrund der Anordnung der Schwenkachsen ist die parallele Ausrichtung des Verschlussteils zum Ventilsitz nicht gewährleistet, weshalb das Verschlussteil beim Kontaktieren des Ventilsitzes zunächst schräg aufsitzt, Scherkräfte auf die Dichtung unvermeidbar sind und keine gleichmässig verteilte Anpresskraft gewährleistet ist. Durch Verwendung der Führungsrolle und der Schwenklager kann die Generierung von Partikeln insbesondere aufgrund von Reibung nicht verhindert werden, weshalb die Partikelfreiheit im Vakuumbereich des Ventils nicht gewährleistet ist.

Aus dem Stand der Technik sind ausserdem Schrägflächenführungen bekannt, um die Ventilplatte in einem letzten Abschnitt des Schliessweges an den die Ventilöffnung umgebenden Ventilsitz anzudrücken. Solche Schrägflächenführungen werden beispielsweise in der WO 2005/064236 A1 und WO 2009/070824 A1 beschrieben. Diese Schrägflächenführungen sind im sensiblen Vakuumbereich des Ventils angeordnet, wobei Partikel erzeugt werden und unerwünschten Verunreinigungen entstehen.

In der US 2008/0302989 A1 (Seitz) wird ein Vakuumschieberventil mit einem Verschlussteller und einem Linearantrieb beschrieben. Mindestens ein Schenkelelement erstreckt sich auf der Rückseite des Verschlusstellers und ist in Verstellrichtung der Schubstange schwenkbar. Das Schenkelelement wird von mindestens zwei Schenkeln, die parallelogrammartig schwenkbar miteinander gekoppelt und in Verstellrichtung der Schubstange parallel beabstandet sind, gebildet. Ein Eingriffselement ist derart ausgeordnet, dass ein Abschnitt des Schenkelelements in Schliessrichtung ab Erreichen der Zwischenposition an einem weiteren Verschieben in die Schliessrichtung gehindert wird, wobei das Schenkelelement derart ausschwenkt, dass der Verschlussteller auf den Ventilsitz in die geschlossene Position gedrückt wird. Diese Ausführung hat den Vorteil eines besonders einfachen Aufbaus des Antriebsmechanismus und - bei einer speziellen offenbarten Ausführungsform - einer linearen, senkrechten Bewegung des Ventiltellers auf den Ventilsitz, so dass die Dichtung gleichmässig auf den Ventilsitz aufgedrückt wird und frei von Querkräften ist. Für manche Anwendungen nachteilig ist das Vorhandensein eines zusätzlichen mechanischen Elements sowie einer Abstützung im Vakuumbereich des Ventils.

In der US 2008/0083897 A1 (Chen), welche als nächstliegender Stand der Technik betrachtet wird, wird ein Vakuumventil beschrieben, bei welchem die Ventilstangen eines Ventiltellers aus dem Vakuumbereich durch eine Durchführung in Form eines Faltenbalgs hinausgeführt sind und ausserhalb des Vakuumbereichs mit einem Bewegungsbalken verbunden sind. Der Bewegungsbalken ist in einer L-förmigen Kulissenführung mittels Rollen gelagert und über einen schräg zur axialen Richtung der Ventilstangen stehenden Schwenkbalken, dessen eines Ende mit Bewegungsbalken verschwenkbar verbunden und dessen anderes Ende linear mittels Rollen verschiebbar geführt ist, mit einem Linearantrieb gekoppelt. Beim Schliessen des Ventiltellers ausgehend von einer Offenstellung wird das linear mittels Rollen verschiebbar gelagerte Ende des Schwenkbalkens vom Aktuator parallel zur axialen Richtung der Ventilstangen verschoben und nimmt hierbei den Bewegungsbalken in axialer Richtung der Ventilstangen mit, bis die Rollen des Bewegungsbalkens von einem linearen, sich parallel zu der axialen Richtung der Ventilstangen erstreckenden Abschnitt der Kulissenführung in einen sich quer erstreckenden Abschnitt der Kulissenführung gelangen. Aufgrund der schrägen Anordnung des Schwenkbalkens werden in der Folge beim weiteren linearen Verschieben des Endes des Schwenkbalkens die Rollen des Bewegungsbalkens im sich quer erstreckenden Abschnitt der Kulissenführung verschoben, bis sie am Ende dieses Abschnitts anschlagen. Durch diese Querverschiebung des Bewegungsbalkens schwenken die Ventilstangen um eine nahe der Durchführung gelegene geometrische Schwenkachse, so dass der Ventilteller mittels der Schwenkbewegung an den Ventilsitz angepresst wird. Ein Vorteil der beschriebenen Ausführungsform besteht darin, dass lediglich ein einfacher Linearantrieb verwendet werden muss und die wesentlichen Antriebskomponenten ausserhalb des Vakuumbereichs angeordnet sind, so dass die Erzeugung von prozessschädigenden Partikeln im Vakuumbereich gering gehalten wird. Ein weiterer Vorteil besteht in der verbesserten Wartbarkeit der Antriebskomponenten, da der Antriebsbereich und der Vakuumbereich mittels des Faltenbalgs gasdicht getrennt sind. Nachteilig ist jedoch, dass der Ventilteller nicht mittels einer linearen Querbewegung senkrecht auf den Ventilsitz gedrückt wird, da die Querbewegung eine Schwenkbewegung ist, so dass keine gleichmässige Verpressung der Dichtung zwischen dem Ventilteller und dem Ventilsitz gewährleistet ist. Ein weiteres Problem besteht darin, dass aufgrund des wegen der Länge der Ventilstangen sehr langen Hebelarms bei Belastung des Ventiltellers eine sehr hohe Kraft sowohl auf den Schwenkbalken, als auch auf den Bewegungsbalken wirkt. Aufgrund der Verhältnisse der Hebelarme und der zwangsläufigen Elastizität der hoch beanspruchten Teile sind eine präzise Führung und ein präzises Anpressen des Ventiltellers auf den Ventilsitz kaum möglich. Die maximale Belastbarkeit des Ventiltellers und somit auch die maximale Druckdifferenz des Ventils sind verhältnismässig gering. Wegen ungleichmässiger Verpressung und Querbewegungen wird die Dichtung einem erhöhten Verschleiss unterworfen.

Es ist daher Aufgabe der Erfindung, ein Vakuumschieberventil, insbesondere ein Vakuum-Transferventil, zur Verfügung zu stellen, das sich durch einen verhältnismässig einfach aufgebauten Antrieb in Form möglichst nur eines Aktuators, eine geringe Partikelgenerierung im Vakuumbereich, einen geringen Verschleiss der Dichtung aufgrund einer im Wesentlichen senkrechten und gleichmässigen Verpressung der Dichtung auf den Ventilsitz, eine hohe Belastbarkeit des Vakuumventils und eine gute Wartbarkeit auszeichnet.

Diese Aufgabe wird durch die Verwirklichung der kennzeichnenden Merkmale des unabhängigen Anspruchs gelöst. Merkmale; die die Erfindung in alternativer oder vorteilhafter Weise weiterbilden, sind den abhängigen Patentansprüchen zu entnehmen.

Das erfindungsgemässe Vakuumschieberventil zum gasdichten Schliessen eines Fliesswegs umfasst ein Ventilgehäuse mit einer Ventilwand, die eine Öffnung für den Fliessweg aufweist. Unter dem Fliessweg ist allgemein ein zu schliessender Öffnungspfad zwischen zwei Bereichen - insbesondere zwischen zwei Beschichtungsanlagen jeglicher Art, beispielsweise für Solar- oder sonstige Anwendungen, oder zwischen einer Prozesskammer zur Halbleiterfertigung und entweder einer weiteren Prozesskammer oder der Aussenwelt - zu verstehen. Der Fliessweg ist beispielsweise ein Verbindungsgang zwischen zwei miteinander verbundenen Prozesskammern, wobei die Prozesskammern mittels des Vakuumventils zum Transfer der Halbleiterteile von der einen zur nächsten Prozesskammer geöffnet und im Anschluss zur Durchführung des jeweiligen Fertigungsschritts gasdicht verschlossen werden können. Derartige Ventile werden aufgrund des beschriebenen Anwendungsgebiets auch als Vakuum-Transferventile und aufgrund ihres meist rechteckigen Öffnungsquerschnitts auch als Rechteckschieber bezeichnet. Selbstverständlich ist jedoch auch jede beliebige andere Anwendung des erfindungsgemässen Vakuumventils zum im Wesentlichen gasdichten Schliessen eines beliebigen Fliesswegs möglich.

Die Öffnung kann einen beliebigen, insbesondere rechteckigen, kreisrunden oder ovalen Querschnitt aufweisen. Vorzugsweise ist das Vakuumventil als ein Transferventil mit einem länglichen, insbesondere im Wesentlichen rechteckigen Öffnungsquerschnitt ausgebildet, wobei die Breite der Öffnung senkrecht zu der Verstellachse vorzugsweise mindestens das Doppelte oder mindestens das Dreifache oder mindestens das Fünffache der Höhe der Öffnung parallel zu der Verstellachse beträgt. Es ist jedoch auch möglich, den Öffnungsquerschnitt anders auszugestalten, beispielsweise kreisrund, wobei das Vakuumventil zum Beispiel ein Pumpenventil ist. Die Öffnung hat eine Mittelachse, die sich im Bereich der Öffnung in der Mitte des Fliesswegs parallel zu diesem erstreckt. Diese geometrische Öffnungsachse steht beispielsweise senkrecht auf der von der Öffnung aufgespannten Fläche und erstreckt sich entlang des Fliesswegs.

In einer speziellen Ausführungsform ist gegenüber von der Ventilwand im Ventilgehäuse eine zweite Ventilwand mit einer zweiten Öffnung, die der ersten Öffnung gegenüberliegt, angeordnet, wobei der Bereich im Ventilgehäuse zwischen diesen beiden Wänden und Öffnungen das Ventilinnere bzw. den Vakuumbereich des Ventils bildet.

Die Öffnung in der Ventilwand wird von einem Ventilsitz umlaufen. Unter dem Ventilsitz ist allgemein funktional ein als Dichtfläche wirkender Abschnitt in der Ventilwand zu verstehen, auf dem eine weitere als Dichtfläche wirkende Fläche aufsetzen kann. Vorzugsweise weist der Ventilsitz senkrecht in das Innere des Ventilgehäuses und liegt insbesondere in einer geometrischen Ebene, die von der geometrischen Öffnungsachse senkrecht durchstossen wird.

Mittels einer Verschlussplatte kann die Öffnung verschlossen werden. Die Verschlussplatte besitzt beispielsweise einen rechteckigen Querschnitt und eine Verschlussseite zum im Wesentlichen gasdichten Verschliessen der Öffnung. Die Abmessungen der Verschlussplatte ermöglichen ein Verschliessen der Öffnung durch Überlappen der Öffnung und Herstellen eines gasdichten Kontakts zwischen der Verschlussplatte und dem Ventilsitz. In einer möglichen Ausführungsform ist am Rand der Verschlussseite ein Dichtungsring zum Anpressen auf den Ventilsitz fixiert.

Die Verschlussplatte wird von mindestens einer Ventilstange getragen. In anderen Worten ist die Verschlussplatte auf mindestens einer Ventilstange - zur besseren Stabilität der Verschlussplatte vorzugsweise auf zwei oder mehr sich parallel erstreckenden Ventilstangen - angeordnet. Die mindestens eine Ventilstange erstreckt sich vorzugsweise parallel zu einer Längsachse des Vakuumschieberventils. Die Verschlussplatte kann starr auf der mindestens einen Ventilstange, insbesondere demontierbar, oder auch beweglich angeordnet sein. Eine Beweglichkeit, insbesondere in Form einer Schwenkbarkeit, z.B. in Form eines Kugelgelenks zwischen den Ventilstangen und der Verschlussplatte, kann beispielsweise für eine Justierung oder Anpassung der Ausrichtung der Verschlussplatte vorteilhaft sein.

Mit der mindestens einen Ventilstange ist eine Antriebseinheit gekoppelt. Diese Antriebseinheit ist allgemein formuliert derart ausgebildet, dass die Verschlussplatte durch Verstellen der mindestens einen Ventilstange im Wesentlichen entlang der geometrischen Längsachse in eine Längsschliessrichtung von einer Offenposition in eine Zwischenposition und entgegen der Längsschliessrichtung zurück verstellbar ist. In der Offenposition gibt die Verschlussplatte die Öffnung frei, indem sie sich vollständig oder teilweise ausserhalb des Projektionsbereichs der Öffnung befindet. In der Zwischenposition überdeckt die Verschlussplatte die Öffnung und befindet sich also im Projektionsbereich der Öffnung, wobei sich die Verschlussseite in einer beabstandeten Gegenüberlage zum Ventilsitz befindet. Das Verstellen der Verschlussplatte entlang der Längsachse erfolgt also insbesondere quer zur Öffnung. Ausserdem ist die Antriebseinheit allgemein formuliert derart ausgebildet, dass die Verschlussplatte durch Verstellen der mindestens einen Ventilstange im Wesentlichen entlang einer rechtwinklig zur Längsachse verlaufenden geometrischen Querachse in eine Querschliessrichtung von der Zwischenposition in eine Schliessposition und in entgegen der Querschliessrichtung zurück verstellbar ist. In der Schliessposition ist die Verschlussseite der Verschlussplatte im Wesentlichen senkrecht auf den Ventilsitz angedrückt, so dass die Verschlussseite die Öffnung im Wesentlichen gasdicht verschliesst. Das Verstellen der Verschlussplatte entlang der Querachse erfolgt also insbesondere senkrecht zur Öffnung.

In anderen Worten ist die Antriebseinheit derart ausgebildet, dass die mindestens eine Ventilstange mit der Verschlussplatte eine L-förmige Bewegung einerseits entlang der geometrischen Längsachse zwischen einer Offenposition und einer Zwischenposition, andererseits entlang der rechtwinklig zur Längsachse verlaufenden geometrischen Querachse zwischen den Zwischenposition und der Schliessposition vollziehen kann.

Vorzugsweise verläuft die Längsachse senkrecht zu der Öffnungsachse und liegt auf einer Ebene, die senkrecht von der Öffnungsachse durchstossen wird, wobei sich die Querachse parallel zu der Öffnungsachse erstreckt.

Die Verstellrichtung der mindestens einen Ventilstange mit der Verschlussplatte entlang der Längsachse von der Offenposition in die Zwischenposition wird als Längsschliessrichtung bezeichnet, wohingegen die entgegengesetzte Verstellrichtung von der Zwischenposition in die Offenposition als entgegengesetzte Längsschliessrichtung definiert ist. Ebenso werden die Verstellrichtung von der Zwischenposition in die Schliessposition als Querschliessrichtung und die Verstellrichtung von der Schliessposition in die Zwischenposition als entgegengesetzte Querschliessrichtung bezeichnet.

Das Ventilgehäuse weist einen Vakuumbereich und ausserhalb dieses Vakuumbereichs einen Antriebsbereich auf. In dem Vakuumbereich sind die Öffnung, der Ventilsitz, die Verschlussplatte und der dort befindliche Abschnitt der mindestens einen Ventilstange angeordnet. Der Vakuumbereich ist also der Bereich des Ventils, der von dem Medium, das durch die Öffnung strömt oder das innenseitig auf der Verschlussplatte anliegt, durchströmt bzw. erfasst wird.

Der Vakuumbereich und der Antriebsbereich sind im Wesentlichen gasdicht voneinander getrennt. Die mindestens eine Ventilstange ist durch mindestens eine gasdichte Durchführung im Ventilgehäuse von dem Vakuumbereich in den Antriebsbereich hindurchgeführt. Diese Durchführung ist derart ausgebildet, dass die mindestens eine ventilstange entlang der Längsachse zwischen der Offenposition und der Zwischenposition und entlang der Querachse zwischen der Zwischenposition und der Schliessposition bewegbar ist. Eine derartige Durchführung kann beispielsweise von einer Membrandichtung, die eine axiale und radiale Beweglichkeit der abzudichtenden Ventilstange ermöglicht, oder auch von mindestens einem Faltenbalg gebildet werden. In dem Antriebsbereich sind die Antriebseinheit und der dort befindliche Abschnitt der mindestens einen Ventilstange angeordnet. Ein wesentlicher Vorteil der Anordnung der Antriebseinheit im Antriebsbereich ausserhalb des Vakuumbereichs besteht darin, dass die von der Antriebseinheit unvermeidbar produzierten Reibpartikel nicht in den sensiblen Vakuumbereich gelangen. Hierdurch wird die Partikelanzahl im Vakuumbereich gering gehalten.

Die mindestens eine Ventilstange ist starr mit einem in dem Antriebsbereich angeordneten Verschiebeteil der Antriebseinheit verbunden. In anderen Worten ist im Antriebsbereich ein verschiebbar gelagertes Verschiebeteil angeordnet, auf welchem die Schubstange fixiert ist oder die mehreren Ventilstangen fixiert sind, so dass eine Bewegung des Verschiebeteils zu einer korrespondierenden Bewegung der mindestens einen Ventilstange im normalen Betrieb des Ventils führt.

Das Verschiebeteil ist mittels einer Führung, die der Antriebseinheit zugeordnet und in dem Antriebsbereich angeordnet ist, zwischen einer ersten Position und einer zweiten Position sowie zwischen der zweiten Position rund einer dritten Position verstellbar.

In der ersten Position des Verschiebeteils, das über die mindestens eine Ventilstange mit der Verschlussplatte gekoppelt ist, befindet sich die Verschlussplatte in der Offenposition, während sich in der zweiten Position des Verschiebeteils die Verschlussplatte in der Zwischenposition befindet. In der dritten Position der Verschiebeteils befindet sich die Verschlussplatte in der Schliessposition.

Zwischen der ersten Position und der zweiten Position ist das Verschiebeteil mittels der Führung parallel zu der Längsachse unschwenkbar geführt und entlang der Längsachse verschiebbar. In anderen Worten ist das Verschiebeteil zwischen der ersten und zweiten Position mittels der Führung derart linear zwangsgeführt, dass zwischen der ersten und zweiten Position ausschliesslich ein translatorischer Freiheitsgrad parallel zur Längsachse besteht. Dieser translatorische Freiheitsgrad ist jedoch in Längsschliessrichtung bei der zweiten Position begrenzt, denn die Führung ist derart ausgebildet, dass eine weitere Verschiebung des Verschiebeteil in Längsschliessrichtung bei Erreichen der zweiten Position blockiert ist.

Zwischen der zweiten Position und der dritten Position, in' der sich die. Verschlussplatte in der Schliessposition befindet, ist das Verschiebeteil mittels der Führung parallel zu der Querachse unschwenkbar geführt und entlang der Querachse verschiebbar. In anderen Worten ist das Verschiebeteil zwischen der zweiten und dritten Position mittels der Führung derart linear zwangsgeführt, dass zwischen der zweiten und dritten Position ausschliesslich ein translatorischer Freiheitsgrad parallel zur Querachse besteht.

In anderen Worten bewirkt die Führung eine L-förmige Linearführung des Verschiebeteils entlang der Längsachse bzw. der Querachse. Konkrete Ausführungsformen einer solchen Führung werden von weiteren Aspekten der Erfindung erfasst.

Die Antriebseinheit weist einen Linearaktuator mit einem parallel zu der Längsachse linear verstellbaren Verstellglied auf. Ein solcher Linearaktuator, in anderen Worten Linearantrieb, kann von mindestens einem mechanischen Antrieb wie einem Spindelantrieb, einem Rollengewindetrieb, einem Kugelgewindetrieb, einem Scherenantrieb, sowie einer Kolben-Zylindereinheit wie einem Pneumatikantrieb, einem Hydraulikzylinder, sowie einem elektromechanischen Linearantrieb oder einem sonstigen geeigneten Antrieb gebildet werden. Unterschiedliche Linearaktuatoren sind aus dem Stand der Technik bekannt. Das Verstellglied kann im Falle eines Spindelantriebs insbesondere eine Spindelmutter umfassen.

Das Verstellglied ist mit dem Verschiebeteil über eine Schrägverbindung mechanisch gekoppelt. Diese Schrägverbindung ist derart ausgebildet, dass das Verstellglied beim linearen Verstellen in die Längsschliessrichtung eine schräg zur Längsschliessrichtung gerichtete Kraft auf das Verschiebeteil mit Kraftkomponenten in der Längsschliessrichtung und in der Querschliessrichtung ausübt, so dass das L-förmig zwangsgeführte Verschiebeteil von der ersten Position in die zweiten Position und von der zweiten Position in die dritte Position verstellbar ist. Die Schrägverbindung ist somit derart ausgebildet, dass mittels des linearen Verstellens des Verstellglieds in die Längsschliessrichtung bei in der zweiten Position in Längsschliessrichtung blockiertem Verschiebeteil das Verschieben des Verschiebeteils in die Querschliessrichtung in die dritte Position erfolgt.

In einer Weiterbildung der Erfindung weist die beschriebene Führung eine Kulissenführung auf. Diese Kulissenführung besitzt insbesondere ein Führungsteil, das mit dem Verschiebeteil um eine geometrische Verschiebeteilachse schwenkbar mittels einer Schwenklagerung verbunden ist. Diese geometrische Verschiebeteilachse verläuft rechtwinklig zur Längsachse und liegt in einer Ebene, zu welcher die Querachse eine geometrische Normale bildet. Die geometrische Verschiebeteilachse liegt somit auch in einer geometrischen Ebene, zu welcher die Längsachse eine geometrische Normale bildet. Zudem besitzt die Kulissenführung eine erste Führungsbahn, in der ein erstes Führungsglied des Führungsteils geführt ist, und eine zweite Führungsbahn, in der ein zweites Führungsglied des Führungsteils geführt ist. Das Führungsteil erstreckt sich insbesondere zumindest teilweise entlang der Längsachse. Das Führungsteil erstreckt sich zudem zwischen der ersten Führungsbahn und der zweiten Führungsbahn, in denen das jeweilige Führungsglied des Führungsteils geführt ist. Die Führungsglieder sind zueinander in Längsschliessrichtung versetzt.

Die erste und die zweite Führungsbahn können auch jeweils von mehreren Führungsbahnen, insbesondere gegenüberliegenden Führungsbahnpaaren gebildet werden. Beispielsweise bestehen die zwei Führungsbahnen aus jeweils zwei gegenüberliegenden. Führungsbahnen, insbesondere aus Schlitzen, die in zwei parallelen Flächen ausgeformt sind, die einander gegenüberliegen und zwischen denen sich das Führungsteil und das Verschiebeteil parallel zur Verschiebeteilachse erstrecken, wobei zu diesen parallelen Flächen die Verschiebeteilachse insbesondere eine geometrische Normale bildet. Die Führungsglieder werden beispielsweise von Rollen gebildet, die in den Führungsbahnen, insbesondere den Schlitzen, abrollen. Die Führungsbahnen verlaufen derart, dass die Verschiebeteilachse des Verschiebeteils von der ersten Position in die zweite Position parallel zu der Längsachse und von der zweiten Position in die dritte Position parallel zu der Querachse geführt ist. Es gibt unterschiedliche Kombinationen von Verlaufsformen von zwei Führungsbahnen, die eine derartige L-förmige Zwangsführung der geometrischen Verschiebeteilachse bewirken.

Eine besonders einfache und vorteilhafte Verlaufsform der Führungsbahnen wird im Folgenden beschrieben. Die erste Führungsbahn, insbesondere das gegenüberliegende erste Führungsbahnpaar, verläuft linear parallel zu der Längsachse. Insbesondere wird die erste Führungsbahn von einem gerade verlaufenden Schlitz gebildet. Die zweite Führungsbahn, insbesondere das zweite Führungsbahnpaar, setzt sich aus einem ebenfalls geraden Führungsbahnabschnitt und aus einem gebogenen Führungsbahnabschnitt zusammen, insbesondere aus entsprechenden Schlitzen. Der gerade Führungsbahnabschnitt, insbesondere das gerade Führungsbahnabschnittspaar, verläuft linear parallel zu der Längsachse mit einer linearen Erstreckung, die der linearen Erstreckung der ersten Führungsbahn entspricht. In anderen Worten ist der gerade Führungsbahnabschnitt genauso lang wie die erste Führungsbahn. Der gebogene Führungsbahnabschnitt erstreckt sich im Wesentlichen in oder entgegen der Querschliessrichtung.

Dieser gebogene Führungsbahnabschnitt kann von einem Kreisbogen gebildet werden, der beispielsweise den geraden Führungsabschnitt insbesondere rechtwinklig schneidet und dessen geometrischer Mittelpunkt auf einer zu der Verschiebeteilachse parallelen geometrische Achse liegt, die insbesondere durch das erste Führungsglied in der zweiten Position den Verschiebeteils läuft. In diesem Falle schwenkt das Verschiebeteil beim Verstellen von der zweiten Position in die dritte Position um diese geometrische Achse des ersten Führungsglieds. Somit kommt es jedoch beim Verstellen von der zweiten in die dritte Position und hierdurch auch beim Verstellen der Verschlussplatte von der Zwischenposition in die Schliessposition nicht nur zu einem Verstellen in die Querschliessrichtung, sondern auch zu einem geringfügigen Verstellen in oder entgegen die Längsschliessrichtung. Dieser Effekt kann durch Versetzen des geometrischen Mittelpunkts reduziert werden und ist abhängig von den Grössenverhältnissen zum Teil derart gering, dass von eine quasi-linearen Querbewegung ausgegangen werden kann.

Es ist jedoch möglich, die Geometrie der Führungsabschnitte derart zu wählen, dass beim Verstellen zwischen der zweiten und dritten Position tatsächlich eine geradlinige geometrische Linearbewegung rechtwinklig zur Längsachse und senkrecht auf den Ventilsitz erfolgt. Dies kann insbesondere dadurch bewirkt werden, dass der gebogene Führungsbahnabschnitt die Form eines Bogensegments einer geometrischen Ellipse hat. Die geometrische erste Ellipsenachse dieser Ellipse liegt auf der ersten Führungsbahn, während die geometrische zweite Ellipsenachse auf einer zu der Querachse parallelen und sich zwischen der zweiten Position und der dritten Position der Verschiebeteilachse erstreckenden geometrischen Gerade liegt. Unter der ersten und zweiten Ellipsenachse sind die geometrische Hauptachse bzw. die Nebenachse, oder umgekehrt zu verstehen. Abhängig von den gewählten Abmessungsverhältnissen hat der die Geometrie eines Bogensegments einer geometrischen Ellipse aufweisende gebogene Führungsbahnabschnitt allerdings eine derart quasikreisbogenartige Form, dass die Abweichung zwischen der elliptischen und kreisförmigen Bogenform sehr gering ist und innerhalb der Fertigung- oder Führungstoleranzen liegt. Dies hängt jedoch vor allem von der Länge des Führungsteils und der Länge des Verstellwegs zwischen der zweiten und dritten Position ab.

In einer Weiterbildung der Erfindung wird die Schrägverbindung, die das Verstellglied mit dem Verschiebeteil mechanisch koppelt, von einer Schrägflächenführung gebildet. Diese Schrägflächenführung ist derart ausgebildet, dass eine Relativverschiebung zwischen dem Verstellglied und dem Verschiebeteil entlang einer geometrischen Schrägachse ermöglicht wird. Insbesondere sind das Verstellglied und das Verschiebeteil mittels eines Linearlagers entlang der Schrägachse linear zueinender verschiebbar gelagert. Diese geometrische Schrägachse verläuft schräg zur Längsachse in der Ebene, in der die Längsachse und Querachse liegen. Die geometrische Schrägachse liegt derart schräg zur Längsachse, dass das Verschiebeteil mittels der Relativverschiebung von der zweiten Position in die dritte Position durch den Linearaktuator verstellbar ist. In anderen Worten wird durch das relative Verschieben des Verschiebeteils und des Verstellglieds zueinander die Linearbewegung des Verstellglieds entlang der Längsachse in Längsschliessrichtung bei in Längsschliessrichtung festgehaltenem Verschiebeteil in eine Querbewegung des Schiebeteils entlang der Querachse in die Querschliessrichtung kinematisch umgewandelt.

In einer speziellen Weiterbildung wird die Schrägflächenführung von einer schräg in Richtung entgegen der Querschliessrichtung und entgegen der Längsschliessrichtung weisende Schrägfläche auf dem Verschiebeteil sowie von auf dem Verstellglied angeordneten Rollen gebildet. Diese Rollen spannen eine mit der Schrägfläche korrespondierende geometrische Fläche auf und rollen auf der Schrägfläche in Richtung entlang der Schrägachse ab. Vorzugsweise sind diese Rollen zueinander versetzt entlang der Schrägachse angeordnet, so dass durch Aufliegen und Abrollen der Rollen auf der Schrägfläche ein Linearlager entlang der Schrägachse gebildet wird. Insbesondere sind auch weitere Rollen zueinander versetzt parallel zur Verschiebeteilachse angeordnet. Beispielsweise sind vier Rollen vorhanden, die zusammen eine geometrische Rechtecksfläche aufspannen. Mittels dieses Linearlagers wird erreicht, dass das Verschiebeteil zu der Längsachse und zu der Querachse parallel geführt ist und zwei entsprechende translatorische Freiheitsgrade aufweist. Damit die beschriebene Schrägflächenführung in beide Richtungen wirkt, also nicht nur beim Verstellen des Verstellglieds in die Längsschliessrichtung, sondern auch beim Verstellen des Verstellglieds entgegen der Längsschliessrichtung, ist folgende Weiterbildung möglich. Das Verschiebeteil hat eine Hinterschnittfläche, die in eine zur Schrägfläche entgegengesetzte Richtung weist. Das Verstellglied besitzt Rückführrollen, die auf der Hinterschnittfläche abrollen. Somit wird erreicht, dass beim Verstellen des Verstellgliedes entgegen der Längsschliessrichtung das Verschiebeteils zurück von der dritten Position in die zweite Position und insbesondere auch von der zweiten Position in die erste Position verstellbar ist. Anstelle der bevorzugten Rollenanordnung ist es auch möglich, andere Mitnehmerelemente, einzusetzen, insbesondere auch Federn, welche das Verschiebeteil in die entgegengesetzte Richtung mit dem Verstellglied koppeln.

Eine Weiterbildung der Erfindung sieht vor, dass zwischen dem Verschiebeteil und dem Verstellglied ein dort wirkender Mitnehmer derart angeordnet ist, dass die Relativverschiebung beim entgegen der Längsschliessrichtung durch den Linearaktuator erfolgenden Verstellen des Verstellglieds von der dritten Position in die zweite Position begrenzt ist. Dies bewirkt, dass beim Verstellen des Verstellgliedes entgegen der Längsschliessrichtung, ausgehend von der dritten Position des Verschiebeteils bzw. der Schliessposition, zunächst eine Relativverschiebung des Verstellglieds relativ zum Verschiebeteil entlang der Schrägachse insbesondere über die oben genannte Rollenführung erfolgt, so dass das Verschiebeteil entgegen der Querschliessrichtung parallel zu der Querachse verschoben wird, bis der Mitnehmer diese Verschiebung entlang der Schrägachse begrenzt. In der Folge wird das Verschiebeteil von dem Verstellglied aufgrund des Wirkens des Mitnehmers in entgegengesetzte Längsschliessrichtung von der zweiten Position, der Zwischenposition, in die erste Position, die Offenposition, linear verschoben.

Der Bewegungsauflauf von der Offenposition in die Geschlossenposition der Verschlussplatte und zurück erfolgt bei der beschriebenen Weiterbildung der Erfindung somit wie folgt. Das mit der in Offenposition stehenden Verschlussplatte gekoppelte Verschiebeteil befindet sich in der ersten Position. Das Verstellglied ist in einer Ausgangsstellung angeordnet und befindet sich relativ zu dem Verschiebeteil in einer zueinander nichtverschobenen Stellung. Das erste Führungsglied ist in der linearen ersten Führungsbahn und das zweite Führungsglied im geraden Führungsbahnabschnitt der zweiten Führungsbahn angeordnet. Nun wird das Verstellglied mittels des Linearaktuators in Längsschliessrichtung linear verschoben, wobei über die Schrägflächenführung das Verschiebeteil parallel zur Längsachse geführt ist und eine schräg zur Längsschliessrichtung gerichtete Kraft auf das Verschiebeteil mit Kraftkomponenten in der Längsschliessrichtung und in der Querschliessrichtung ausgeübt wird. Da die Führungsglieder in dieser Stellung beide in linearen und parallel zu der Längsachse verlaufenden Führungsbahnen geführt werden und das Verschiebeteil entlang der Längsachse zwangsgeführt ist, wobei kein Verschieben entlang der Querachse möglich ist, wird das Verschiebeteil von dem Verstellglied in Längsschliessrichtung mitgenommen, ohne dass es zu einer Relativverschiebung des Verstellglieds relativ zu dem Verschiebeteil an der Schrägflächenführung kommt, bis zum Erreichen der Zwischenposition der Verschlussplatte bzw. der zweiten Position der Verschiebeteils. In dieser zweiten Position, in welcher das Verstellglied und das Verschiebeteil in zueinander nichtverschobener Stellung sind, befinden sich das Verstellglied in einer Zwischenstellung und das zweite Führungsglied im Übergangsbereich zwischen dem geraden Führungsbahnabschnitt und dem gebogenen Führungsbahnabschnitt. Das zweite Führungsglied blockiert somit das Verschiebteil in Längsschliessrichtung in dieser zweiten Position, jedoch ist das Verschiebeteil in dieser zweiten Position nun in Querschliessrichtung verschiebbar. Beim weiteren linearen Verstellen des Verstellglieds entlang der Längsachse in die Längsschliessrichtung von der Zwischenstellung in Richtung einer Endstellung kann das Verschiebeteil nicht mehr weiter in Längsschliessrichtung verschoben werden. Nun rollen die Rollen des Verstellglieds auf der Schrägfläche des Verschiebeteils ab und es kommt zu einer Relativverschiebung des Verstellglieds relativ zum Verschiebeteil, wobei das zweite Führungsglied entlang dem gebogenen Führungsbahnabschnitt der zweiten Führungsbahn geführt wird, das Führungsteil somit um die Verschiebeteilachse in der Schwenklagerung ausschwenkt und das Verschiebeteil parallel zur Querachse in Querschliessrichtung von der zweiten Position in die dritte Position solange verschoben wird, bis die Verschlussplatte die Geschlossenposition erreicht und mit ihrer Verschlussseite senkrecht auf dem Ventilsitz, der die Öffnung umläuft, aufliegt, so dass die Öffnung gasdicht verschlossen wird. Das Verschiebeteil und das Verstellglied befinden sich in der Endstellung bzw. in der dritten Position in zueinander verschobener Stellung.

Das Schliessen erfolgt in umgekehrter Reihenfolge, wobei beim linearen Verstellen des Verstellglieds von der Endstellung in die Zwischenstellung die Rückführrollen des Verstellglieds auf der Hinterschnittfläche des Verschiebeteils abrollen und das Verschiebeteil somit in entgegengesetzte Querschliessrichtung mitgenommen wird, bis die zueinander nichtverschobene Stellung und somit die zweite Position erreicht ist. Der Mitnehmer begrenzt die Relativverschiebung des Verstellglieds relativ zum Verschiebeteil über die nichtverschobene Stellung hinaus entgegen der Längsschliessrichtung. Beim weiteren Verstellen des Verstellglieds von der Zwischenstellung in die Ausgangsstellung wird das Verschiebeteil vom Verstellglied, das sich in nichtverschobener Stellung zum Verschiebeteil befindet, von der zweiten Position in die erste Position verschoben, so dass die Verschlussplatte von der Zwischenposition in die Offenposition parallel zur Längsachse bewegt wird.

Die beschriebene Schrägflächenführung hat den Vorteil, dass die in Querschliessrichtung wirkende Kraftkomponente während des linearen Verstellens des Verstellgliedes und während der Relativverschiebung zwischen Verstellglied und Verschiebeteil entlang der Schrägachse bei gleich bleibender in Längsschliessrichtung wirkender Kraftkomponente in geometrischer Hinsicht konstant bleibt. Somit kann durch Erfassen der Längskraft auch die Querkraft erfasst werden.

Erfindungsgemäss kann der Linearaktuator auch mit Krafterfassungsmitteln ausgestattet sein, mittels welcher die in und entgegen der Längsschliessrichtung auf das Verstellglied wirkende Kraft erfassbar ist. Weiters kann eine mit den Krafterfassungsmittels und dem Linearaktuator derart in Signalverbindung stehende und derart ausgebildete Steuerung vorgesehen sein, dass der Linearaktuator bei Überschreiten eines Kraftgrenzwerts, welcher mit einer bestimmten Anpresskraft der Verschlussplatte auf dem Ventilsitz korrespondiert, angehalten wird.

Diese in Längsschliessrichtung wirkende Kraft kann bei einem als elektrischer Spindelantrieb ausgebildetem Linearaktuator durch Erfassung des am Spindelantrieb anliegenden Stroms erfasst werden. Bei einer insbesondere pneumatischen Kolben-Zylindereinheit kann diese Krafterfassung durch Erfassung des insbesondere pneumatischen Drucks erfolgen.

Anstelle der beschriebenen Schrägflächenführung können jedoch auch andere Schrägverbindungen eingesetzt werden, die derart mechanisch gekoppelt sind, dass das Verstellglied beim linearen Verstellen in die Längsschliessrichtung eine schräg zur Längsschliessrichtung gerichtete Kraft auf das Verschiebeteil mit Kraftkomponenten in der Längsschliessrichtung und in der Querschliessrichtung zum Verstellen des Verschiebeteils von der ersten Position in die zweiten Position und von der zweiten Position in die dritte Position ausübt.

Beispielsweise sieht ein Aspekt der Erfindung vor, dass die Schrägverbindung, die das Verstellglied mit dem Verschiebeteil mechanisch koppelt, von einer Parallelogrammführung mit mindestens zwei parallel zueinander angeordneten Schenkeln gebildet wird. Die mindestens zwei Schenkel sind jeweils um Schenkelachsen schwenkbar mit dem Verstellglied und dem Verschiebeteil verbunden. Die Schenkelachsen verlaufen jeweils parallel zu der geometrischen Verschiebeteilachse, die rechtwinklig zur Längsachse verläuft und in einer Ebene liegt, zu welcher die Querachse eine geometrische Normale bildet. Die Schenkel sind hierbei derart angeordnet und dimensioniert, dass zwischen der ersten Position und der zweiten Position die jeweilige Schenkelachse am Verschiebeteil in Längsschliessrichtung versetzt zu der jeweiligen Schenkelachse am Verstellglied ist. Insbesondere sind die Schenkel auch derart angeordnet und dimensioniert, dass zwischen der zweiten Position und der dritten Position die jeweilige Schenkelachse am Verschiebeteil in Längsschliessrichtung versetzt oder im Wesentlichen nichtversetzt zu der jeweiligen Schenkelachse am Verstellglied ist. Somit wird bewirkt, dass beim Verstellen des Verstellgliedes in die Längsschliessrichtung bei in die Längsschliessrichtung blockiertem Verschiebeteil die Schenkel derart ausschwenken, dass das Verschiebeteil in Querschliessrichtung verstellt wird. Wie auch die Schrägflächenführung bewirkt die Parallelogrammführung, dass das Verschiebeteil parallel zur Längsachse geführt und somit stets gleichermassen parallel zur Längsachse zwangsausgerichtet ist.

Das parallel zu der Längsachse linear verstellbare Verstellglied besitzt in einer Weiterbildung der Erfindung Abstützrollen. Diese Abstützrollen weisen entgegengesetzt zur Querschliessrichtung und rollen auf einer mit dem Ventilgehäuse verbundenen, sich parallel zu der Längsachse erstreckenden Laufbahn zur Abstützung des Verstellglieds am Ventilgehäuse in zur Querschliessrichtung entgegengesetzte Richtung ab. Somit wirkt eine Querekraft in entgegengesetzte Querschliessrichtung direkt auf das Ventilgehäuse, so dass der Linearaktuator im Wesentlichen frei von Querkräften ist. Weiters umfasst die Erfindung, dass von dem Verschiebeteil mindestens ein Abstützteil in Richtung entgegen der Längsschliessrichtung starr absteht, wobei ein in Richtung entgegen der Längsschliessrichtung weisendes freies Ende dieses Abstützteils eine in die Querschliessrichtung weisenden Kontaktfläche aufweist. Das Verschiebeteil ist zwischen der Verschlussplatte und der Kontaktfläche angeordnet. Insbesondere ist das Verschiebeteil im Wesentlichen mittig zwischen Verschlussplatte und Kontaktfläche positioniert. Die Kontaktfläche liegt einer mit der Ventilwand starr verbundenen Abstützung derart gegenüber, dass sich das freie Ende des Abstützteils in der Schliessposition auf der Abstützung in Querschliessrichtung abstützt. Wie oben beschrieben wird beim Verstellen des Verschiebeteils von der zweiten in die dritte Position über die Schrägverbindung eine Querkraft in Richtung der Querschliessrichtung auf das Verschiebteil aufgebracht. In der Geschlossenposition der Verschlussplatte wirken sowohl durch das Aufpressen der Verschlussplatte auf den Ventilsitz, als auch aufgrund am Ventil anliegender Differenzdrücke teilweise sehr hohe Querkräfte auf die Verschlussplatte und somit auch auf das Verschiebeteil. Insbesondere bilden die Verschlussplatte, die mindestens einen Ventilstange, das Verschiebeteil, das mindestens eine Abstützteil und die Kontaktfläche eine Bewegungseinheit. Durch das beschriebene Abstützteil, welches eine Art Verlängerung der Ventilstangen bildet, wird das Verstellglied von Querkräften, die entgegen der Querschliessrichtung wirken, befreit, da sich die genannte Bewegungseinheit aufgrund der Hebelwirkung auf der mit der Ventilwand starr verbundenen Abstützung in Querschliessrichtung abstützt. Das mindestens eine Abstützteil und die mindestens eine Ventilstange können in einer speziellen Ausführungsform der Erfindung einstückig ausgebildet sein, wobei das mindestens eine Abstützteil von einem Abschnitt der mindestens einen Ventilstange gebildet wird.

Das erfindungsgemässe Vakuumschieberventil wird nachfolgend anhand von in den Zeichnungen schematisch dargestellten konkreten Ausführungsbeispielen rein beispielhaft näher beschrieben.

Im Einzelnen zeigen:
- Fig. 1a: eine erste Ausführungsform eines Vakuumschieberventils mit einer Schrägflächenführung in einer Offenposition der Verschlussplatte in schematischer Querschnittsseitenansicht;
- Fig. 1b: die erste Ausführungsform in einer Zwischenposition;
- Fig. 1c: die erste Ausführungsform in einer Geschlossenposition;
- Fig. 2a: eine zweite Ausführungsform eines Vakuumschieberventils mit einer Parallelogrammführung in einer Offenposition der Verschlussplatte in schematischer Querschnittsseitenansicht;
- Fig. 2b: die zweite Ausführungsform in einer Zwischenposition;
- Fig. 2c: die zweite Ausführungsform in einer Geschlossenposition;
- Fig. 3a: die erste Ausführungsform mit geschlossenem Gehäuse in Detailschrägansicht; und
- Fig. 3b: die erste Ausführungsform mit offenem Gehäuse in Detailschrägansicht.

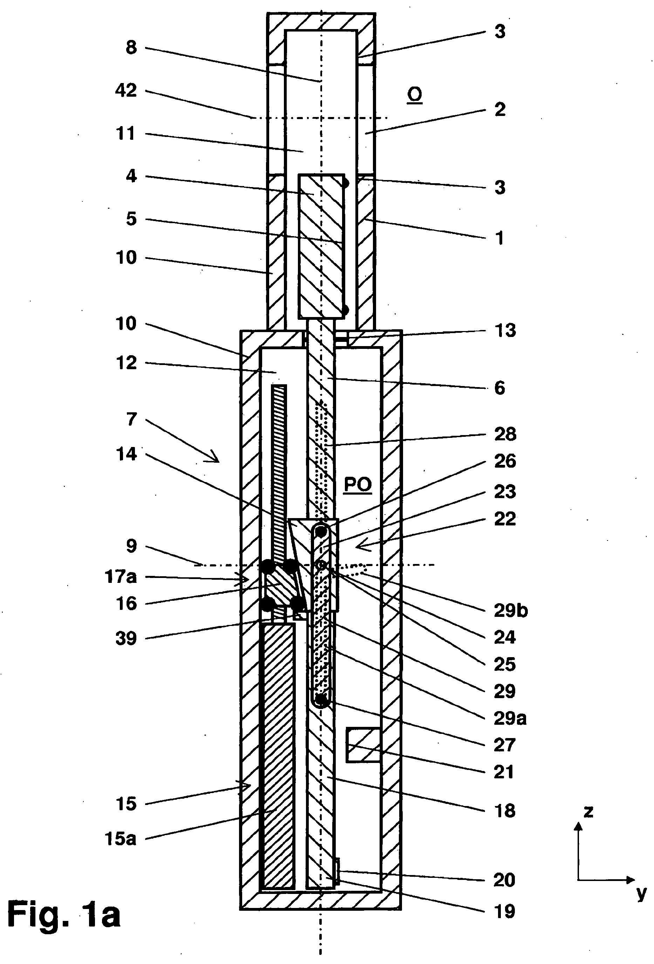

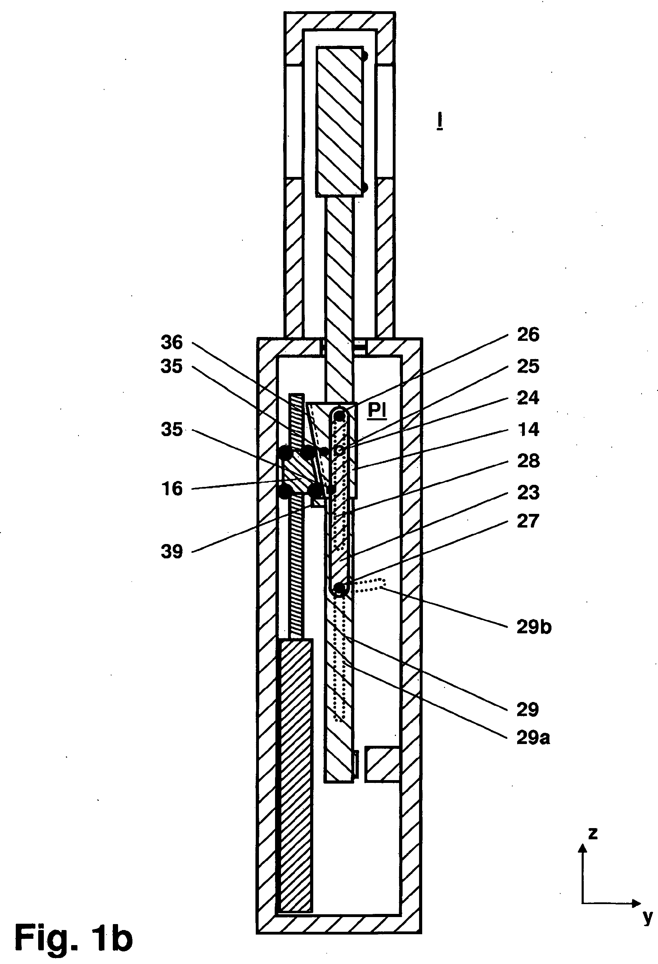

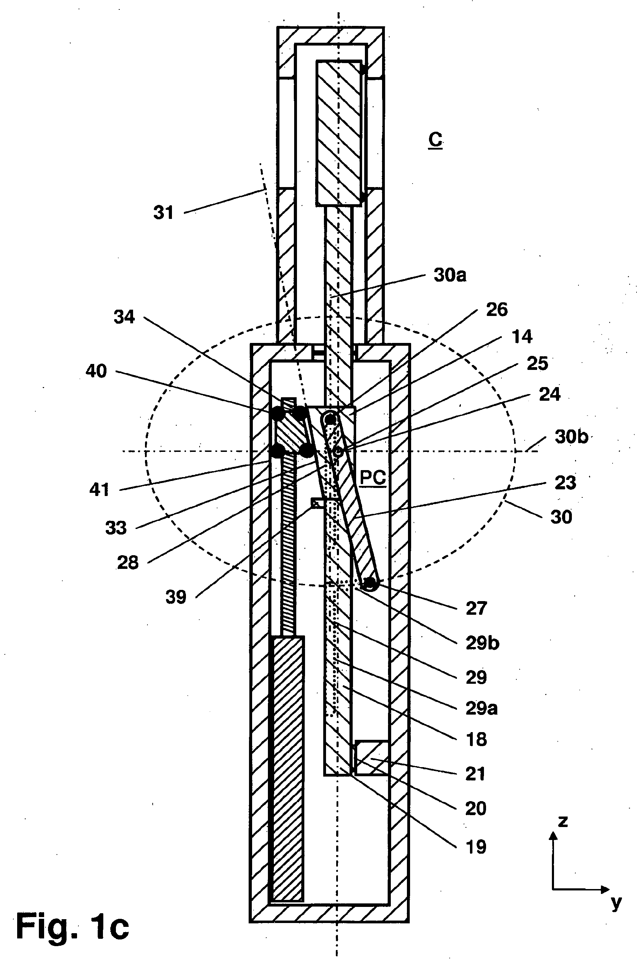

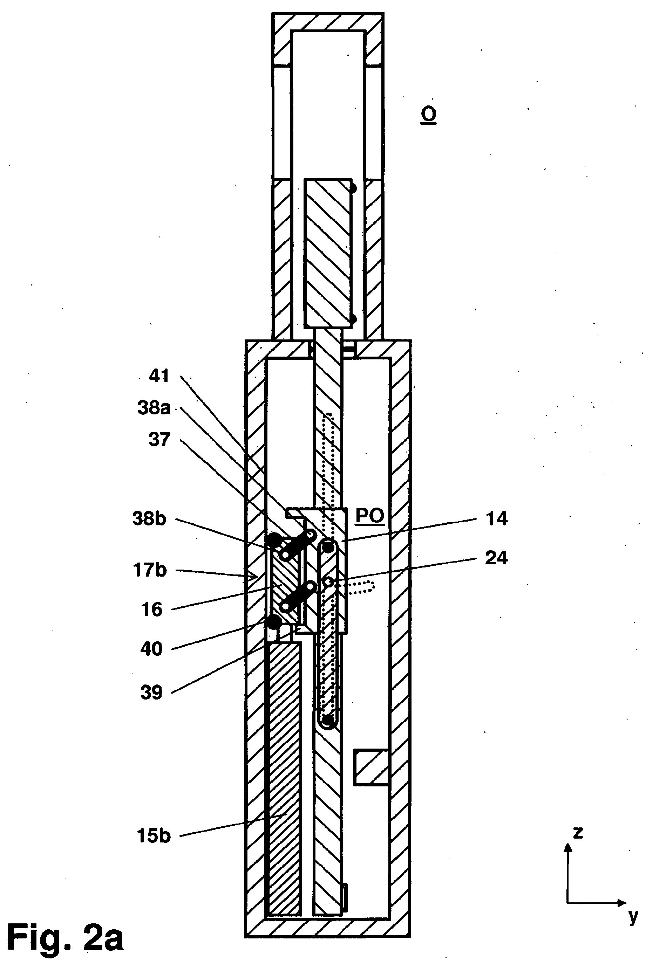

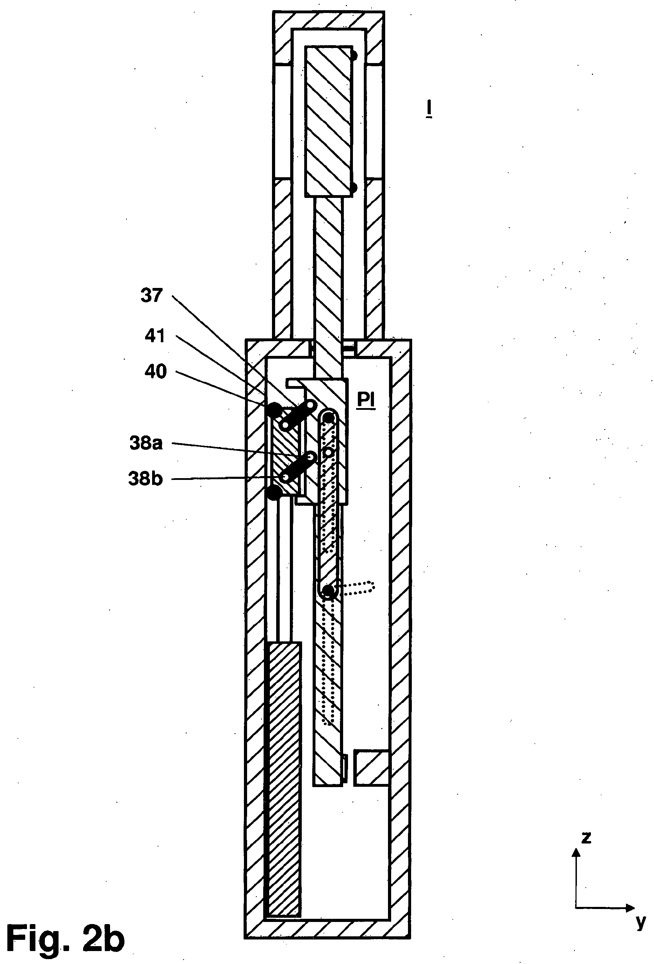

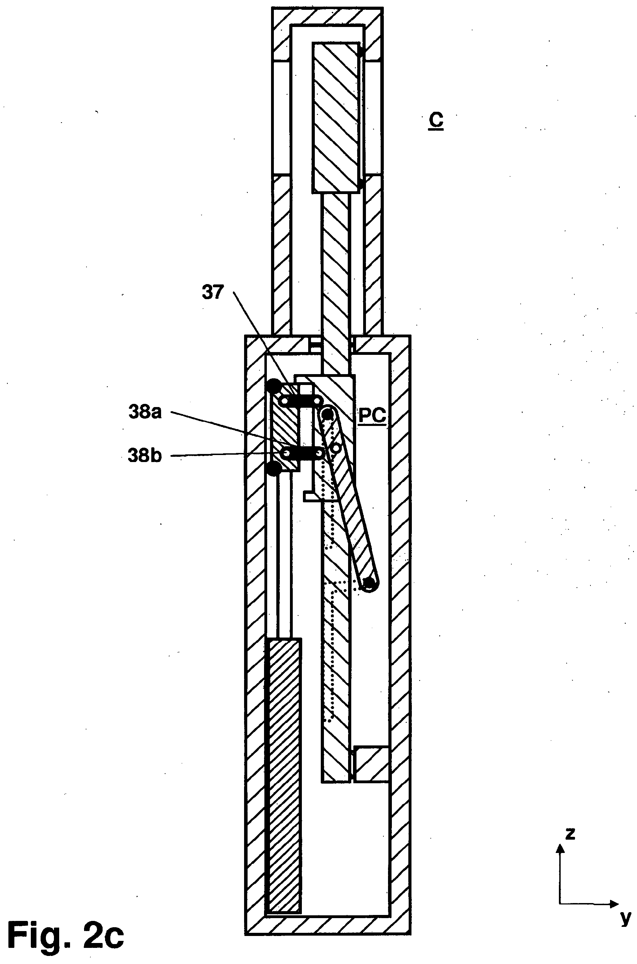

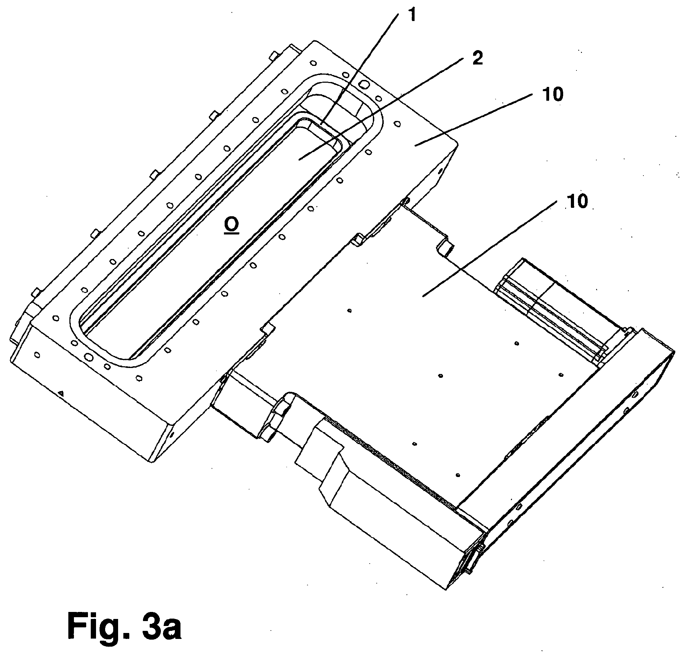

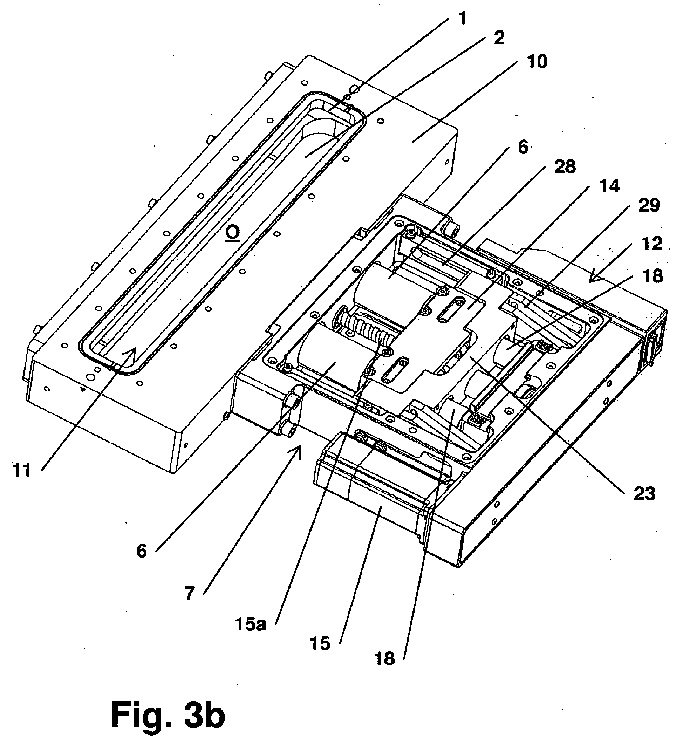

Die Figurengruppe aus den Figuren 1a, 1b, 1c, 3a, 3b, sowie die Figurengruppe aus den Figuren 2a, 2b und 2c zeigen jeweils eine gemeinsame, exemplarische Ausführungsform eines erfindungsgemässen Vakuumschieberventils in unterschiedlichen Zuständen, aus unterschiedlichen Ansichten und in unterschiedlichen Detaillierungsgraden. Daher werden diese Figurengruppen jeweils gemeinsam beschrieben. Die beiden Ausführungsformen unterscheiden sich lediglich bezüglich bestimmter Merkmale voneinander, weshalb teilweise nur auf die Unterschiede der Ausführungsformen eingegangen wird. Zum Teil wird auf bereits in vorangegangenen Figuren erläuterte Bezugszeichen und Merkmale nicht erneut eingegangen. Ausserdem ist zu beachten, dass die Figuren 1a bis 2c schematische Darstellungen zeigen, in denen die Bauteile zur besseren Veranschaulichung zum Teil anders angeordnet und dargestellt sind als in den Detaildarstellungen in den Figuren 3a und 3b.

In den Figuren 1a, 1b, 1c, 3a und 3b ist eine erste Ausführungsform eines erfindungsgemässen Vakuumschieberventils dargestellt. Das Vakuumschieberventil besitzt ein Ventilgehäuse 10 mit einer Ventilwand 1, die eine Öffnung 2 mit einer Öffnungsachse 42 und mit einem länglichen, im Wesentlichen rechteckigen und einen die Öffnung 2 umlaufenden Ventilsitz 3 aufweist. Eine Verschlussplatte 4 mit einer Verschlussseite 5, die einen etwas grösseren Querschnitt als die Öffnung 2 aufweist, dient zum im Wesentlichen gasdichten Verschliessen der Öffnung 2, indem die Verschlussseite 5 auf den Ventilsitz 3 gedrückt wird. Die Verschlussplatte 4 wird von zwei parallel zueinander angeordneten Ventilstangen 6 getragen. Da die Ventilstangen 6 in der Seitenansicht der Figuren 1a bis 1c fluchten, ist dort lediglich eine Ventilstange 6 erkennbar, wohingegen beiden Ventilstangen 6 in Figur 3b, einer Schrägansicht auf das Vakuumschieberventil, zu erkennen sind.

Das Ventilgehäuse 10 unterteilt sich in einen Vakuumbereich 11, in welchem die Öffnung 2, der Ventilsitz 3 und die Verschlussplatte 4 angeordnet sind, und einen Antriebsbereich 12, der ausserhalb des Vakuumbereichs 11 liegt. Die beiden Ventilstangen 6 sind durch zwei gasdichte Durchführungen 13, die als Membrandichtungen ausgeführt sind, im Ventilgehäuse 10 von dem Vakuumbereich 11 in den Antriebsbereich 12 hindurchgeführt. Die Membrandichtungen 13 sind derart ausgeführt, dass die Ventilstangen 6 unter Aufrechterhaltung der gasdichten Abdichtung in einem gewissen Bewegungsbereich entlang einer Längsachse 8 und einer Querachse 9 bewegbar sind. Da der Antriebsbereich 12 von dem Vakuumbereich 11 gasdicht getrennt ist, kann im Antriebsbereich 12 ein Atmosphärendruck herrschen. Im Antriebsbereich 12 befindliche Reibpartikel können nicht in den sensiblen Vakuumbereich gelangen. Im Antriebbereich 12 ist eine Antriebseinheit 7 angeordnet.

Die Antriebseinheit 7 ist, wie im Folgenden noch genauer beschrieben wird, derart ausgebildet ist, dass die Verschlussplatte 4 durch Verstellen der beiden Ventilstangen 6 entlang der geometrischen Längsachse 8 in eine Längsschliessrichtung z von einer Offenposition O, Figur 1a, in eine Zwischenposition I, Figur 1b, und durch Verstellen der beiden Ventilstangen 6 entlang der rechtwinklig zur Längsachse 8 verlaufenden geometrischen Querachse 9 in eine Querschliessrichtung y von der Zwischenposition I, Figur 1b, in eine Schliessposition C, Figur 1c, und zurück verstellbar. Die Antriebseinheit 7 besitzt einen als Spindelantrieb 15a ausgebildeten Linearaktuator 15 mit einem parallel zu der Längsachse 8 linear verstellbaren Verstellglied 16, welches über eine Spindelmutter auf der Spindel läuft.

Die beiden Ventilstangen 6 sind starr mit einem in dem Antriebsbereich 12 angeordneten Verschiebeteil 14 der Antriebseinheit 7 verbunden. Das Verschiebeteil 14 ist mittels einer Führung 22 der Antriebseinheit 7 in dem Antriebsbereich 12 zwischen einer ersten Position PO, Figur 1a, und einer zweiten Position PI, Figur 1b, parallel zu der Längsachse 8 unschwenkbar geführt und entlang der Längsachse 8 verschiebbar, sowie zwischen der zweiten Position PI, Figur 1b, und einer dritten Position PC, Figur 1c, parallel zu der Querachse 9 unschwenkbar geführt und entlang der Querachse 9 verschiebbar. In der ersten Position PO befindet sich die Verschlussplatte 4 in der Offenposition O, in welcher die Verschlussplatte 4 die Öffnung 2 freigibt, Figur 1a. In der zweiten Position PI befindet sich die Verschlussplatte 4 in der Zwischenposition I, in der sie die Öffnung 2 überdeckt und sich die Verschlussseite 5 in einer beabstandeten Gegenüberlage zum Ventilsitz 3 befindet, Figur 1b. In der dritten Position PC, in welcher sich die Verschlussplatte in der Geschlossenposition C befindet, ist die Verschlussseite 5 der Verschlussplatte 4 senkrecht auf den Ventilsitz 3 angedrückt und verschliesst die Öffnung 2 im Wesentlichen gasdicht, Figur 1c. Auf den genauen Aufbau der Führung wir im Folgenden genauer eingegangen.

Die Führung besitzt eine Kulissenführung 22 mit einem sich im Wesentlichen parallel zur Längsachse 8 erstreckenden Führungsteil 23, das mit dem Verschiebeteil 14 um eine geometrische Verschiebeteilachse 24, die rechtwinklig zur Längsachse 8 verläuft und in einer Ebene liegt, zu welcher die Querachse 9 eine geometrische Normale bildet, schwenkbar mittels einer Schwenklagerung 25 in Form zweier Führungszapfen verbunden ist. Wie in Figur 3b erkennbar hat das Führungsteil 23 die Form eines Jochs. Die Kulissenführung 22 besitzt zwei erste Führungsbahnen 28 und zwei zweite Führungsbahnen 29. Zwischen den beiden ersten Führungsbahnen 28 und zwischen den beiden zweiten Führungsbahnen 29 sind die beiden Ventilstangen 6, das Verschiebeteil 14 und das jochförmige Führungsteil 23 angeordnet, wie in Figur 3b erkennbar. Das Führungsteil 23 besitzt auf beiden Seiten jeweils ein erstes Führungsglied 26 in Form jeweils einer Führungsrolle. Das jeweilige erste Führungsglied 26 ist in der jeweiligen ersten Führungsbahn 28 geführt. Ausserdem ist in den beiden zweiten Führungsbahnen 29 jeweils ein ebenfalls als Führungsrolle ausgebildetes zweites Führungsglied 27 des Führungsteils 23 geführt. Die beiden ersten Führungsglieder 26 sind zu den beiden zweiten Führungsgliedern 27 in Längsschliessrichtung z versetzt.

Die beiden ersten Führungsbahnen 28 verlaufen gerade parallel zu der Längsachse 8, wie in den Figuren 1a bis 1c anhand der gestrichelten Linien erkennbar. Die zweiten Führungsbahnen 29 setzen sich jeweils aus einem geraden Führungsbahnabschnitt 29a und aus einem gebogenen Führungsbahnabschnitt 29b zusammen. Der jeweilige gerade Führungsbahnabschnitt 29a verläuft gerade parallel zu der Längsachse 8 mit einer linearen Erstreckung, die der linearen Erstreckung der ersten Führungsbahnen 28 entspricht. Der jeweilige gebogene Führungsbahnabschnitt 29b erstreckt sich im Wesentlichen in der Querschliessrichtung y, wie ebenfalls in den Figuren 1a bis 1c erkennbar. Wie in Figur 1c gezeigt, haben die gebogenen Führungsbahnabschnitte 29b jeweils die Form eines Bogensegments einer geometrischen Ellipse 30, die sich jeweils auf einer Ebene erstreckt, zu welcher die geometrische Verschiebteilachse 24 eine geometrische Normale bildet. Die geometrische erste Ellipsenachse 30a, die parallel zur Längsachse 8 ist, liegt in der Seitenansicht auf der ersten Führungsbahn 28. In andern Worten liegt die jeweilige erste Ellipsenachse 30a auf einer Ebene, zu der die Querachse 9 eine Normale bildet und entlang welcher sich die erste Führungsbahn 28 erstreckt, wobei insbesondere die geometrische Mittelachse der jeweiligen ersten Führungsbahn 28 auf dieser Ebene liegt. Die geometrische zweite Ellipsenachse 30b der jeweiligen geometrischen Ellipse 30 liegt auf einer zu der Querachse 9 parallelen und sich zwischen der zweiten Position PI und der dritten Position PC der Verschiebeteilachse 24 erstreckenden geometrischen Gerade. Somit verlaufen die Führungsbahnen 28 und 29 derart, dass die Verschiebeteilachse 24 des Verschiebeteils 14 von der ersten Position PO in die zweite Position PI parallel zu der Längsachse 8, wie in den Figuren 1a und 1b gezeigt, und von der zweiten Position PI in die dritte Position PC parallel zu der Querachse 9, wie in den Figuren 1b und 1c gezeigt, geführt ist.

In der ersten Ausführungsform der Figuren 1a bis 1c und 3a und 3b wird die Schrägverbindung, die das Verstellglied 16 mit dem Verschiebeteil 14 mechanisch koppelt, von einer Schrägflächenführung 17a gebildet, so dass eine Relativverschiebung zwischen dem Verstellglied 16 und dem Verschiebeteil 14 entlang einer geometrischen Schrägachse 31 ermöglicht wird, wie insbesondere in der Figur 1c gezeigt. Die geometrische Schrägachse 31 verläuft schräg zur Längsachse 8 in der Ebene, in der die Längsachse 8 und Querachse 9 liegen, und liegt derart schräg zur Längsachse 8, dass das Verschiebeteil 14 mittels der Relativverschiebung von der zweiten Position PI in die dritte Position PC durch den Linearaktuator 15 verstellbar ist, wie in den Figuren 1b und 1c gezeigt. Die Schrägflächenführung 17a setzt sich aus einer schräg in Richtung entgegen der Querschliessrichtung y und entgegen der Längsschliessrichtung z weisende Schrägfläche 33 auf dem Verschiebeteil 14 und aus Rollen 34, die auf dem Verstellglied 16 angeordnet sind, eine mit der Schrägfläche 33 korrespondierende geometrische Fläche aufspannen und auf der Schrägfläche 33 in Richtung entlang der Schrägachse 31 abrollen, zusammen. Im gezeigten Ausführungsbeispiel rollen vier Rollen 34, die eine rechteckige Fläche aufspannen, auf der die Schrägachse 31 liegt, auf der Schrägfläche 33 in Richtung parallel zur Schrägachse 31 ab.

Ausserdem besitzt das Verschiebeteil 14 eine Hinterschnittfläche 36, die in eine zur Schrägfläche 33 entgegengesetzte Richtung, nämlich schräg in die Querschliessrichtung y und die Längsschliessrichtung z, weist, wie aus darstellerischen Gründen ausschliesslich in Figur 1b gezeigt. Das Verstellglied 16 hat Rückführrollen 35, die auf der Hinterschnittfläche 36 abrollen, zum Verstellen des Verschiebeteils 14 zurück von der dritten Position PC, Figur 1c, in die zweite Position PI, Figur 1b, und auch weiter von der zweiten Position PI in die erste Position PO, Figur 1a. Mittels eines zwischen dem Verschiebeteil 14 und dem Verstellglied 16 wirkenden Mitnehmers 39 wird erreicht, dass die Relativverschiebung zwischen dem Verstellglied 16 und dem Verschiebeteil 14 beim entgegen der Längsschliessrichtung y durch den Linearaktuator 15 erfolgenden Verstellen des Verstellglieds 16 von der dritten Position PC in die zweite Position PI begrenzt ist, Figur 1b.

Wie in Figur 1c gezeigt besitzt das parallel zu der Längsachse 8 linear verstellbare Verstellglied 16 Abstützrollen 40. Diese Abstützrollen 40 weisen entgegengesetzt zur Querschliessrichtung y und laufen auf einer mit dem Ventilgehäuse 10 verbundenen, sich parallel zu der Längsachse 8 erstreckenden Laufbahn 41 ab, so dass sich das Verstellglied 16 am Ventilgehäuse 10 in Richtung entgegengesetzt zur Querschliessrichtung y abstützen kann.

Von dem Verschiebeteil 14 stehen zwei Abstützteile 18 in Richtung entgegen der Längsschliessrichtung z starr ab, die einstückig mit den beiden Ventilstange 6 ausgebildet sind, so dass die beiden Abstützteile 18 jeweils von einem Abschnitt der beiden Ventilstangen 6 gebildet werden. Jedes der beiden Abstützteile 18 besitzt ein in Richtung entgegen der Längsschliessrichtung z weisendes freies Ende 19, auf dem sich jeweils eine in die Querschliessrichtung y weisende Kontaktfläche 20 befindet. Das Verschiebeteil 14 ist im Wesentlichen mittig zwischen der Verschlussplatte 4 und der Kontaktfläche 20 angeordnet. Dieser Kontaktfläche 20 liegt in der zweiten Position PI und der dritten Position PC eine mit der Ventilwand 1 starr verbundenen Abstützung 21 derart gegenüber, dass sich das freie Ende 19 des Abstützteils 18 in der Schliessposition C auf der Abstützung 21 in Querschliessrichtung y abstützen kann, wie in der Figur 1c gezeigt.

Im Folgenden wird der Bewegungsauflauf von der Offenposition O, Figur 1a, in die Geschlossenposition C, Figur 1c, der Verschlussplatte 4 beschrieben. Die Verschlussplatte 4 ist in Offenposition O und das damit gekoppelte Verschiebeteil 14 befindet sich in der ersten Position PO, wie in Figur 1a gezeigt. Das Verstellglied 16 ist in einer Ausgangsstellung angeordnet und befindet sich relativ zu dem Verschiebeteil 16 in einer zueinander nichtverschobenen Stellung, Figur 1a. Das jeweilige erste Führungsglied 26 ist in der jeweiligen linearen ersten Führungsbahn 28 und das jeweilige zweite Führungsglied 27 im jeweiligen geraden Führungsbahnabschnitt 29a der zweiten Führungsbahn 29 angeordnet. Nun wird das Verstellglied 16 mittels des Linearaktuators 15 durch Antreiben der Spindel des Spindelantriebs 15a in Längsschliessrichtung z linear verschoben, wobei über die Schrägflächenführung 17a das Verschiebeteil 14 parallel zur Längsachse 8 geführt ist und eine schräg zur Längsschliessrichtung z gerichtete Kraft auf das Verschiebeteil 14 mit Kraftkomponenten in der Längsschliessrichtung z und in der Querschliessrichtung y ausgeübt wird. Da die beiden ersten Führungsglieder 26 und die beiden zweiten Führungsglieder 27 in dieser Stellung beide in linearen und parallel zu der Längsachse 8 verlaufenden Führungsbahnen 28 und 29a geführt werden und das Verschiebeteil 14 entlang der Längsachse 8 zwangsgeführt ist, wobei kein Verschieben entlang der Querachse 9 möglich ist, wird das Verschiebeteil 14 von dem Verstellglied 16 in Längsschliessrichtung z mitgenommen, ohne dass es zu einer Relativverschiebung des Verstellglieds 16 relativ zu dem Verschiebeteil 14 an der Schrägflächenführung 17a kommt, bis zum Erreichen der Zwischenposition I der Verschlussplatte 4 bzw. der zweiten Position PI der Verschiebeteils 14, wie in Figur 1b dargestellt.

In dieser zweiten Position PI, Figur 1b, in welcher das Verstellglied 16 und das Verschiebeteil 14 in zueinander nichtverschobener Stellung sind, befinden sich das Verstellglied 16 in einer Zwischenstellung und das zweite Führungsglied 27 im Übergangsbereich zwischen dem geraden Führungsbahnabschnitt 29a und dem gebogenen Führungsbahnabschnitt 29b. Das zweite Führungsglied 27 blockiert somit das Verschiebteil 14 in Längsschliessrichtung z in dieser zweiten Position PI, jedoch ist das Verschiebeteil 14 in dieser zweiten Position PI nun in Querschliessrichtung y verschiebbar. Beim weiteren linearen Verstellen des Verstellglieds 16 entlang der Längsachse 8 in die Längsschliessrichtung z von der Zwischenstellung in Richtung einer Endstellung, Übergang von Figur 1b zu Figur 1c, kann das Verschiebeteil 14 nicht mehr weiter in Längsschliessrichtung y verschoben werden. Nun rollen die Rollen 34 des Verstellglieds 16 auf der Schrägfläche 33 des Verschiebeteils 14 ab und es kommt zu einer Relativverschiebung des Verstellglieds 16 relativ zum Verschiebeteil 14, wobei das zweite Führüngsglied 27 entlang dem gebogenen Führungsbahnabschnitt 29b der zweiten Führungsbahn 29 geführt wird, das Führungsteil 23 somit um die Verschiebeteilachse 24 in der Schwenklagerung 25 relativ zum Verschiebeteil 14 schwenkt und das Verschiebeteil 14 parallel zur Querachse 9 in Querschliessrichtung y von der zweiten Position PI in die dritte Position PC solange verschoben wird, bis die Verschlussplatte 4 die Geschlossenposition C erreicht und mit ihrer Verschlussseite 5 senkrecht auf dem Ventilsitz 3, der die Öffnung 2 umläuft, aufliegt, so dass die Öffnung 2 gasdicht verschlossen wird, wie in Figur 1c gezeigt. Hierbei stützt sich das Verstellglied 16 über die Abstützrollen 40 auf der Laufbahn 41 in Richtung entgegen zur Querschliessrichtung y ab. Das Verschiebeteil 14 und das Verstellglied 16 befinden sich in der Endstellung bzw. in der dritten Position in zueinander verschobener Stellung. In der Geschlossenposition C kommen ausserdem die beiden Abstützteile 18, die in Richtung entgegen der Längsschliessrichtung z starr abstehen, jeweils mit der in die Querschliessrichtung y weisenden Kontaktfläche 20 auf der jeweiligen Abstützung 21 zum Liegen. Somit stützt sich das jeweilige freie Ende 19 des Abstützteils 18 in der Schliessposition C auf der Abstützung 21 in Querschliessrichtung y ab. Mittels dieser Abstützung 21 wird eine erhöhte Stabilität erreicht, so dass die Verschlussplatte 4 einer hohen Querbeanspruchung ausgesetzt werden kann.

Das Schliessen erfolgt in umgekehrter Reihenfolge, wobei beim linearen Verstellen des Verstellglieds 16 von der Endstellung in die Zwischenstellung die Rückführrollen 35 des Verstellglieds 16 auf der Hinterschnittfläche 36 des Verschiebeteils 14 abrollen und das Verschiebeteil 14 somit in entgegengesetzte Querschliessrichtung y mitgenommen wird, bis die zueinander nichtverschobene Stellung und somit die zweite Position PI erreicht ist. Der Mitnehmer 39 begrenzt die Relativverschiebung des Verstellglieds 16 relativ zum Verschiebeteil 14 über die nichtverschobene Stellung hinaus entgegen der Längsschliessrichtung z, wie in Figur 1b gezeigt. Beim weiteren Verstellen des Verstellglieds 16 von der Zwischenstellung in die Ausgangsstellung wird das Verschiebeteil 14 vom Verstellglied 16, das sich in nichtverschobener Stellung zum Verschiebeteil 14 befindet, von der zweiten Position PI in die erste Position PO verschoben, Figur 1a, so dass die Verschlussplatte 4 von der Zwischenposition I in die Offenposition O parallel zur Längsachse 8 bewegt wird, wie in Figur 1a gezeigt.

In den Figuren 2a bis 2c ist eine zweite Ausführungsform der Erfindung dargestellt, die sich zur ersten Ausführungsform dadurch unterscheidet, dass anstelle eines Spindelantriebs 15a eine Kolben-Zylindereinheit 15b als Linearaktuator 15 zum linearen Verstellen des Verstellgliedes 16 zum Einsatz kommt und die Schrägverbindung, die das Verstellglied 16 mit dem Verschiebeteil 14 mechanisch koppelt, von einer Parallelogrammführung 17b anstatt von einer Schrägflächenführung 17a gebildet wird. Im Folgenden wird daher lediglich auf diese Unterschiede eingegangen, wobei gemeinsame, bereits zuvor erläuterte Merkmale nicht erneut beschrieben werden.

Die Parallelogrammführung 17b weist zwei parallel zueinander angeordnete Schenkelpaare 37 auf, die jeweils um eine erste Schenkelachse 38a und eine zweite Schenkelachse 38b schwenkbar mit dem Verstellglied 16 und dem Verschiebeteil 14 verbunden sind. Das mittels der Kolben-Zylindereinheit 15b entlang der Längsachse 8 verschiebbare Verstellglied 16 ist mittels Abstützrollen 40 entlang einer Laufbahn 41 geführt und stützt sich dort in entgegengesetzte Querrichtung y ab. Die Schenkelachsen 38a und 38b verlaufen jeweils parallel zu der geometrischen Verschiebeteilachse 24, die rechtwinklig zur Längsachse 8 verläuft und in einer Ebene liegt, zu welcher die Querachse 9 eine geometrische Normale bildet. Die Schenkel 37 stehen in der ersten Position PO und der zweiten Position PI derart schräg, dass zwischen der ersten Position PO und der zweiten Position PI die jeweilige erste Schenkelachse 38a am Verschiebeteil 14 in Längsschliessrichtung z versetzt zu der jeweiligen zweiten Schenkelachse 38b am Verstellglied 16 ist. Die Schenkel sind derart angeordnet und dimensioniert, dass zwischen der zweiten Position PI und der dritten Position PC die jeweilige erste Schenkelachse 38a am Verschiebeteil 14 in Längsschliessrichtung z versetzt oder, wie in Figur 2c in der dritten Position PC gezeigt, im Wesentlichen nichtversetzt zu der jeweiligen zweiten Schenkelachse 38b am Verstellglied 16 ist. Somit wird bewirkt, dass beim Verstellen des Verstellgliedes 16 in die Längsschliessrichtung z bei in die Längsschliessrichtung z blockiertem Verschiebeteil 14 die Schenkel 37 derart ausschwenken, dass das Verschiebeteil 14 in Querschliessrichtung y verstellt wird. Wie auch die Schrägflächenführung 17a bewirkt die Parallelogrammführung 17b, dass das Verschiebeteil 14 parallel zur Längsachse 8 geführt und somit stets gleichermassen parallel zur Längsachse 8 zwangsausgerichtet ist, wie in den Figuren 2a bis 2c gezeigt.

Ein Vorteil der Parallelogrammführung 17b gegenüber der Schrägflächenführung 17a besteht darin, dass die Rückführrollen 35 entfallen könne, da die Parallelogrammführung 17b sowohl in Querschliessrichtung y, als auch entgegengesetzt wirkt. Zudem kann mittels einer im Wesentlichen nicht versetzten Anordnung der Schenkelachsen 38a und 38b in der dritten Position PC, wie in Figur 2c. gezeigt, eine Selbsthemmung bzw. eine Verriegelung der Verschlussplatte 4 bewirkt werden. Ein Vorteil der Schrägflächenführung 17a ist hingegen, dass die Längskraft und die Querkraft zueinander proportional sind, so dass durch Erfassen der Längskraft am Verstellglied 16 präzise auf die an der Verschlussplatte 4 herrschenden Querkraft geschlossen werden kann.

## Patentansprüche

1. Vakuumschieberventil mit
• einer Ventilwand (1), die eine Öffnung (2) und einen die Öffnung (2) umlaufenden Ventilsitz (3) aufweist,
• einer Verschlussplatte (4) mit einer Verschlussseite (5) zum im Wesentlichen gasdichten Verschliessen der Öffnung (2),
• mindestens einer die Verschlussplatte (4) tragenden Ventilstange (6),
• einer mit der mindestens einen Ventilstange (6) gekoppelten Antriebseinheit (7), die derart ausgebildet ist, dass die Verschlussplatte (4)
- durch Verstellen der mindestens einen Ventilstange (6) im Wesentlichen entlang einer geometrischen Längsachse (8) in eine Längsschliessrichtung (z) von
• einer Offenposition (O), in welcher die Verschlussplatte (4) die Öffnung (2) freigibt, in
• eine Zwischenposition (I), in welcher die Verschlussplatte (4) die Öffnung (2) überdeckt und sich die Verschlussseite (5) in einer beabstandeten Gegenüberlage zum Ventilsitz (3) befindet,
und
- durch Verstellen der mindestens einen Ventilstange (6) im Wesentlichen entlang einer rechtwinklig zur Längsachse (8) verlaufenden geometrischen Querachse (9) in eine Querschliessrichtung (y) von
• der Zwischenposition (I) in
• eine Schliessposition (C), in welcher die Verschlussseite (5) der Verschlussplatte (4) im Wesentlichen senkrecht auf den Ventilsitz (3) angedrückt ist und die Öffnung (2) im Wesentlichen gasdicht verschliesst,
und zurück verstellbar ist, und
• einem Ventilgehäuse (10) mit einem Vakuumbereich (11), in welchem die Öffnung (2), der Ventilsitz (3) und die Verschlussplatte (4) angeordnet sind, wobei die mindestens eine Ventilstange (6) durch mindestens eine gasdichte Durchführung (13) im Ventilgehäuse (10) von dem Vakuumbereich (11) in einen ausserhalb des Vakuumbereichs (11) liegenden Antriebsbereich (12), in dem die Antriebseinheit (7) angeordnet ist, entlang der Längsachse (8) und der Querachse (9) bewegbar hindurchgeführt ist,
**dadurch gekennzeichnet, dass**
• die mindestens eine Ventilstange (6) starr mit einem in dem Antriebsbereich (12) angeordneten Verschiebeteil (14) der Antriebseinheit (7) verbunden ist,
• das Verschiebeteil (14) mittels einer Führung (22) der Antriebseinheit (7) in dem Antriebsbereich (12)
- zwischen einer ersten Position (PO), in der sich die Verschlussplatte (4) in der Offenposition (O) befindet, und einer zweiten Position (PI), in der sich die Verschlussplatte (4) in der Zwischenposition (I) befindet, parallel zu der Längsachse (8) unschwenkbar geführt und entlang der Längsachse (8) verschiebbar ist, wobei die Führung (22) eine weitere Verschiebung des Verschiebeteil (14) in Längsschliessrichtung (z) bei Erreichen der zweiten Position (PI) blockiert, und
- zwischen der zweiten Position (PI) und einer dritten Position (PC), in der sich die Verschlussplatte (4) in der Schliessposition (C) befindet, parallel zu der Querachse (9) unschwenkbar geführt und entlang der Querachse (9) verschiebbar ist,
• die Antriebseinheit (7) einen Linearaktuator (15) mit einem parallel zu der Längsachse (8) linear verstellbaren Verstellglied (16) aufweist, und
• das Verstellglied (16) mit dem Verschiebeteil (14) über eine Schrägverbindung (17a; 17b) derart mechanisch gekoppelt ist, dass
- das Verstellglied (16) beim linearen Verstellen in die Längsschliessrichtung (z) eine schräg zur Längsschliessrichtung (z) gerichtete Kraft auf das Verschiebeteil (14) mit Kraftkomponenten in der Längsschliessrichtung (z) und in der Querschliessrichtung (y) zum verstellen des Verschiebeteils (14) von der ersten Position (PO) in die zweiten Position (PI) und von der zweiten Position (PI) in die dritte Position (PC) ausübt, und
- mittels des linearen Verstellens des Verstellglieds (16) in die Längsschliessrichtung (z) bei in Längsschliessrichtung (z) blockiertem Verschiebeteil (14) in der zweiten Position (PI) das Verschieben des Verschiebeteils (14) in die Querschliessrichtung (y) in die dritte Position (PC) erfolgt.

2. Vakuumschieberventil nach Anspruch 1,
**dadurch gekennzeichnet, dass**
die Führung eine Kulissenführung (22) aufweist.

3. Vakuumschieberventil nach Anspruch 2,
**dadurch gekennzeichnet, dass**
die Kulissenführung (22)
• ein Führungsteil (23), das mit dem Verschiebeteil (14) um eine geometrische Verschiebeteilachse (24), die rechtwinklig zur Längsachse (8) verläuft und in einer Ebene liegt, zu welcher die Querachse (9) eine geometrische Normale bildet, schwenkbar mittels einer Schwenklagerung (25) verbunden ist,
• eine erste Führungsbahn (28), in der ein erstes Führungsglied (26) des Führungsteiles (23) geführt ist, und
• eine zweite Führungsbahn (29), in der ein zweites Führungsglied (27) des Führungsteils (23) geführt ist,
aufweist, wobei die Führungsglieder (26, 27) zueinander in Längsschliessrichtung (z) versetzt sind und wobei die Führungsbahnen (28, 29) derart verlaufen, dass die Verschiebeteilachse (24) des Verschiebeteils (14) von der ersten Position (PO) in die zweite Position (PI) parallel zu der Längsachse (8) und von der zweiten Position (PI) in die dritte Position (PC) parallel zu der Querachse (9) geführt ist.

4. Vakuumschieberventil nach Anspruch 3,
**dadurch gekennzeichnet, dass**
• die erste Führungsbahn (28) parallel zu der Längsachse (8) linear verläuft,
• sich die zweite Führungsbahn (29) aus einem geraden Führungsbahnabschnitt (29a) und aus einem gebogenen Führungsbahnabschnitt (29b) zusammensetzt,
• der gerade Führungsbahnabschnitt (29a) parallel zu der Längsachse (8) mit einer linearen Erstreckung, die der linearen Erstreckung der erste Führungsbahn (28) entspricht, linear verläuft,
• sich der gebogenen Führungsbahnabschnitt (29b) im Wesentlichen in oder entgegen der Querschliessrichtung (y) erstreckt.

5. Vakuumschieberventil nach Anspruch 4,
**dadurch gekennzeichnet, dass**
der gebogene Führungsbahnabschnitt (29b) die Form eines Bogensegments einer geometrischen Ellipse (30) hat,
• deren geometrischen erste Ellipsenachse (30a) auf der ersten Führungsbahn (28) liegt und
• deren geometrische zweite Ellipsenachse (30b) auf einer zu der Querachse (9) parallelen und sich zwischen der zweiten Position (PI) und der dritten Position (PC) der Verschiebeteilachse (24) erstreckenden geometrischen Gerade liegt.

6. Vakuumschieberventil nach einem der Ansprüche 1 bis 5,
**dadurch gekennzeichnet, dass**
• die Schrägverbindung, die das Verstellglied (16) mit dem Verschiebeteil (14) mechanisch koppelt, von einer Schrägflächenführung (17a) gebildet wird zur Ermöglichung einer Relativverschiebung zwischen dem Verstellglied (16) und dem Verschiebeteil (14) entlang einer geometrischen Schrägachse (31), die schräg zur Längsachse (8) in der Ebene, in der die Längsachse (8) und Querachse (9) liegen, verläuft, und
• die geometrische Schrägachse (31) derart schräg zur Längsachse (8) liegt, dass das Verschiebeteil (14) mittels der Relativverschiebung von der zweiten Position (PI) in die dritte Position (PC) durch den Linearaktuator (15) verstellbar ist.

7. Vakuumschieberventil nach Anspruch 6,
**dadurch gekennzeichnet, dass**
die Schrägflächenführung (17a) von
• einer schräg in Richtung entgegen der Querschliessrichtung (y) und entgegen der Längsschliessrichtung (z) weisende Schrägfläche (33) auf dem Verschiebeteil (14) und
• Rollen (34), die auf dem Verstellglied (16) angeordnet sind, eine mit der Schrägfläche (33) korrespondierende geometrische Fläche aufspannen und auf der Schrägfläche (33) in Richtung entlang der Schrägachse (31) abrollen, gebildet wird.

8. Vakuumschieberventil nach Anspruch 7,
**dadurch gekennzeichnet, dass**
• das Verschiebeteil (14) eine Hinterschnittfläche (36), die in eine zur Schrägfläche (33) entgegengesetzte Richtung weist, aufweist und
• das Verstellglied (16) Rückführrollen (35), die auf der Hinterschnittfläche (36) abrollen, zum Verstellen des Verschiebeteils (14) zurück von der dritten Position (PC) in die zweite Position (PI) - insbesondere von der zweiten Position (PI) in die erste Position (PO) - durch den Linearaktuator (15) aufweist.

9. Vakuumschieberventil nach einem der Ansprüche 6 bis 8,
**gekennzeichnet durch**
einen zwischen dem Verschiebeteil (14) und dem Verstellglied (16) wirkenden Mitnehmer (39), der derart angeordnet ist, dass die Relativverschiebung beim entgegen der Längsschliessrichtung (y) **durch** den Linearaktuator (15) erfolgenden Verstellen des Verstellglieds (16) von der dritten Position (PC) in die zweite Position (PI) begrenzt ist.

10. Vakuumschieberventil nach einem der Ansprüche 1 bis 5,
**dadurch gekennzeichnet, dass**
• die Schrägverbindung, die das Verstellglied (16) mit dem Verschiebeteil (14) mechanisch koppelt, von einer Parallelogrammführung (17b) mit mindestens zwei parallel zueinander angeordneten Schenkeln (37) gebildet wird,
• die mindestens zwei Schenkel (37) jeweils um Schenkelachsen (38a, 38b) schwenkbar mit dem Verstellglied (16) und dem Verschiebeteil (14) verbunden sind,
• die Schenkelachsen (38a, 38b) jeweils parallel zu einer geometrischen Verschiebeteilachse (24), die rechtwinklig zur Längsachse (8) verläuft und in einer Ebene liegt, zu welcher die Querachse (9) eine geometrische Normale bildet, verlaufen und
• die Schenkel (37) derart angeordnet und dimensioniert sind, dass zwischen der ersten Position (PO) und der zweiten Position (PI) die jeweilige Schenkelachse (38a) am Verschiebeteil (14) in Längsschliessrichtung (z) versetzt zu der jeweiligen Schenkelachse (38b) am Verstellglied (16) ist.

11. Vakuumschieberventil nach einem der Ansprüche 1 bis 10,
**dadurch gekennzeichnet, dass**
das parallel zu der Längsachse (8) linear verstellbare Verstellglied (16) Abstützrollen (40) aufweist, die entgegengesetzt zur Querschliessrichtung (y) weisen und die auf einer mit dem Ventilgehäuse (10) verbundenen, sich parallel zu der Längsachse (8) erstreckenden Laufbahn (41) abrollen, zur Abstützung des Verstellglieds (16) am Ventilgehäuse (10) in zur Querschliessrichtung (y) entgegengesetzte Richtung.

12. Vakuumschieberventil nach einem der Ansprüche 1 bis 11,
**dadurch gekennzeichnet, dass**
• von dem Verschiebeteil (14) mindestens ein Abstützteil (18) in Richtung entgegen der Längsschliessrichtung (z) starr absteht, wobei ein in Richtung entgegen der Längsschliessrichtung (z) weisendes freies Ende (19) des Abstützteils (18) eine in die Querschliessrichtung (y) weisenden Kontaktfläche (20) aufweist,
• das Verschiebeteil (14) - insbesondere im Wesentlichen mittig - zwischen der Verschlussplatte (4) und der Kontaktfläche (20) angeordnet ist und
• die Kontaktfläche (20) einer mit der Ventilwand (1) starr verbundenen Abstützung (21) in der zweiten Position (PI) und der dritten Position (PC) derart gegenüberliegt, dass sich das freie Ende (19) des Abstützteils (18) in der Schliessposition (C) auf der Abstützung (21) in Querschliessrichtung (y) abstützt.

13. Vakuumschieberventil nach Anspruch 12,
**dadurch gekennzeichnet, dass**
das mindestens eine Abstützteil (18) und die mindestens eine Ventilstange (6) einstückig ausgebildet sind und das mindestens eine Abstützteil (18) von einem Abschnitt der mindestens einen Ventilstange (6) gebildet wird.

14. Vakuumschieberventil nach einem der Ansprüche 1 bis 13,
**dadurch gekennzeichnet, dass**
der Linearaktuator (15) als Spindelantrieb (15a) ausgebildet ist.

15. Vakuumschieberventil nach einem der Ansprüche 1 bis 13,
**dadurch gekennzeichnet, dass**
der Linearaktuator (15) als Kolben-Zylindereinheit (15b) ausgebildet ist.

## Claims

1. Vacuum slide gate valve with
• a valve wall (1), which has an opening (2) and a valve seat (3) running around the opening (2)
• a closure plate (4) with a closure side (5) for closing the opening (2) in a substantially gas-tight manner,
• at least one valve rod (6) carrying the closure plate (4),
• a drive unit (7), which is coupled to the at least one valve rod (6) and which is formed in such a way that the closure plate (4),
- by displacing the at least one valve rod (6) in a longitudinal closing direction (z), substantially along a geometric longitudinal axis (8), is displaceable from
· an open position (O), in which the closure plate (4) releases the opening (2), into
· an intermediate position (I), in which the closure plate (4) covers the opening (2) and the closure side (5) is arranged opposite the valve seat (3) at a distance therefrom,
and,
- by displacing the at least one valve rod (6) in a transverse closing direction (y), substantially along a geometric transverse axis (9) running at right angles to the longitudinal axis (8), is displaceable from
· the intermediate position (I) into
· a closing position (C), in which the closure
· side (5) of the closure plate (4) is pressed substantially perpendicularly against the valve seat (3) and closes the opening (2) in a substantially gas-tight manner,
and back again, and with
• a valve body (10) having a vacuum region (11), in which the opening (2), the valve seat (3) and the closure plate (4) are arranged, the at least one valve rod (6) being guided movably along the longitudinal axis (8) and the transverse axis (9) through at least one gas-tight aperture (13) in the valve body (10) from the vacuum region (11) into a drive region (12), which is arranged outside the vacuum region (11) and in which the drive unit (7) is arranged,
**characterized in that**
• the at least one valve rod (6) is rigidly connected to a sliding part (14) of the drive unit (7), said sliding part being arranged in the drive region (12),
• the sliding part (14), by means of a guide (22) of the drive unit (7) in the drive region (12),
- is guided non-pivotably, parallel to the longitudinal axis (8), between a first position (PO), in which the closure plate (4) is in the open position (O), and a second position (PI), in which the closure plate (4) is in the intermediate position (I), and is slidable along the longitudinal axis (8), the guide (22) blocking a further sliding of the sliding part (14) in the longitudinal closing direction (z) once the second position (PI) has been reached, and
- is guided non-pivotably, parallel to the transverse axis (9), between the second position (PI) and a third position (PC), in which the closure plate (4) is in the closing position (C), and is slidable along the transverse axis (9),
• the drive unit (7) has a linear actuator (15) with a displacement member (16) linearly displaceable parallel to the longitudinal axis (8), and
• the displacement member (16) is mechanically coupled to the sliding part (14) via an inclined connection (17a; 17b), in such a way that
- the displacement member (16), when linearly displaced in the longitudinal closing direction (z), exerts a force, which is directed at an incline with respect to the longitudinal closing direction (z), onto the sliding part (14) with force components in the longitudinal closing direction (z) and in the transverse closing direction (y) in order to displace the sliding part (14) from the first position (PO) into the second position (PI) and from the second position (PI) into the third position (PC), and,
- by means of the linear displacement of the displacement member (16) in the longitudinal closing direction (z) with the sliding part (14) blocked in the longitudinal closing direction (z) in the second position (PI), the sliding part (14) is slid in the transverse closing direction (y) into the third position (PC).

2. Vacuum slide gate valve according to Claim 1,
**characterized in that**
the guide has a link guide (22).

3. Vacuum slide gate valve according to Claim 2,
**characterized in that**
the link guide (22) has
• a guide part (23), which is connected by means of a pivot bearing (25) to the sliding part (14) pivotably about a geometric sliding part axis (24), which runs at right angles to the longitudinal axis (8) and lies in a plane with respect to which the transverse axis (9) forms a geometric normal,
• a first guide path (28), in which a first guide member (26) of the guide part (23) is guided, and
• a second guide path (29), in which a second guide member (27) of the guide part (23) is guided,
the guide members (26, 27) being offset with respect to one another in the longitudinal closing direction (z), and the guide paths (28, 29) running in such a way that the sliding part axis (24) of the sliding part (14) is guided from the first position (PO) into the second position (PI) parallel to the longitudinal axis (8) and from the second position (PI) into the third position (PC) parallel to the transverse axis (9).

4. Vacuum slide gate valve according to Claim 3,
**characterized in that**
• the first guide path (28) runs linearly parallel to the longitudinal axis (8),
• the second guide path (29) is composed of a straight guide path portion (29a) and from a bent guide path portion (29b),
• the straight guide path portion (29a) runs linearly parallel to the longitudinal axis (8) with a linear extension, which corresponds to the linear extension of the first guide path (28),
• the bent guide path portion (29b) extends substantially in or against the transverse closing direction (y).

5. Vacuum slide gate valve according to Claim 4,
**characterized in that**
the bent guide path portion (29b) has the form of an arc segment of a geometric ellipsis (30),
• of which the geometric first ellipsis axis (30a) lies on the first guide path (28), and
• of which the geometric second ellipsis axis (30b) lies on a geometric straight line parallel to the transverse axis (9) and extending between the second position (PI) and the third position (PC) of the sliding part axis (24).

6. Vacuum slide gate valve according to any one of Claims 1 to 5,
**characterized in that**
• the inclined connection, which mechanically couples the displacement member (16) to the sliding part (14), is formed by an inclined surface guide (17a) so as to enable a relative sliding between the displacement member (16) and the sliding part (14) along a geometric inclined axis (31), which runs at an incline with respect to the longitudinal axis (8) in the plane in which the longitudinal axis (8) and transverse axis (9) lie, and
• the geometric inclined axis (31) lies at an incline with respect to the longitudinal axis (8) in such a way that the sliding part (14) is displaceable by means of the relative sliding from the second position (PI) into the third position (PC) by the linear actuator (15).

7. Vacuum slide gate valve according to Claim 6,
**characterized in that**
the inclined surface guide (17a) is formed by
• an inclined surface (33) on the sliding part (14), said inclined surface pointing at an incline in the direction against the transverse closing direction (y) and against the longitudinal closing direction (z), and
• rollers (34), which are arranged on the displacement member (16), span a geometric area corresponding to the inclined surface (33) and roll over the inclined surface (33) in the direction along the inclined axis (31).

8. Vacuum slide gate valve according to Claim 7,
**characterized in that**
• the sliding part (14) has an undercut surface (36), which points in a direction opposite the inclined surface (33), and
• the displacement member (16) has return rollers (35), which roll over the undercut surface (36) in order to displace the sliding part (14) back from the third position (PC) into the second position (PI) - in particular from the second position (PI) into the first position (PO) - by the linear actuator (15).

9. Vacuum slide gate valve according to any one of Claims 6 to 8,
**characterized by**
a driver (39), which acts between the sliding part (14) and the displacement member (16) and which is arranged in such a way that the relative sliding when the displacement member (16) is displaced from the third position (PC) into the second position (PI) against the longitudinal closing direction (y) by the linear actuator (15) is delimited.

10. Vacuum slide gate valve according to any one of Claims 1 to 5,
**characterized in that**
• the inclined connection, which mechanically couples the displacement member (16) to the sliding part (14), is formed by a parallelogram guide (17b) having at least two branches (37) arranged parallel to one another,
• the at least two branches (37) are each connected pivotably about branch axes (38a, 38b) to the displacement member (16) and the sliding part (14),
• the branch axes (38a, 38b) each run parallel to a geometric sliding part axis (24), which runs at right angles to the longitudinal axis (8) and lies in a plane with respect to which the transverse axis (9) forms a geometric normal, and
• the branches (37) are arranged and dimensioned in such a way that, between the first position (PO) and the second position (PI), the respective branch axis (38a) at the sliding part (14) in the longitudinal closing direction (z) is offset with respect to the respective branch axis (38b) at the displacement member (16).

11. Vacuum slide gate valve according to any one of Claims 1 to 10,
**characterized in that**
the displacement member (16) linearly displaceable parallel to the longitudinal axis (8) has support rollers (40), which point opposite the transverse closing direction (y) and which roll over a track (41) connected to the valve body (10) and extending parallel to the longitudinal axis (8), in order to support the displacement member (16) on the valve body (10) in the direction opposite the transverse closing direction (y).

12. Vacuum slide gate valve according to any one of Claims 1 to 11,
**characterized in that**
• at least one support part (18) protrudes rigidly from the sliding part (14) in a direction against the longitudinal closing direction (z), a free end (19) of the support part (18) pointing in a direction against the longitudinal closing direction (z) having a contact surface (20) pointing in the transverse closing direction (y),
• the sliding part (14) is arranged - in particular substantially centrally - between the closure plate (4) and the contact surface (20), and
• the contact surface (20), in the second position (PI) and the third position (PC), is arranged opposite a support (21) rigidly connected to the valve wall (1), in such a way that the free end (19) of the support part (18) is supported in the closing position (C) on the support (21) in the transverse closing direction (y).

13. Vacuum slide gate valve according to Claim 12,
**characterized in that**
the at least one support part (18) and the at least one valve rod (6) are formed integrally and the at least one support part (18) is formed by a portion of the at least one valve rod (6).

14. Vacuum slide gate valve according to any one of Claims 1 to 13,
**characterized in that**
the linear actuator (15) is formed as a spindle drive (15a).

15. Vacuum slide gate valve according to any one of Claims 1 to 13,
**characterized in that**
the linear actuator (15) is formed as a piston-cylinder unit (15b).

## Revendications

1. Soupape à coulisse à vide avec
• une paroi de soupape (1) qui présente une ouverture (2) et un siège de soupape (3) qui entoure l'ouverture (2),
• une plaque de fermeture (4) avec un côté fermeture (5) pour fermer l'ouverture (2) de manière substantiellement étanche au gaz,
• au moins une tige de soupape (6) qui porte la plaque de fermeture (4),
• une unité d'entraînement (7), couplée à la tige de soupape qui existe au moins (6), qui est configurée de manière telle que la plaque de fermeture (4) est réglable
- par réglage de la tige de soupape qui existe au moins (6) substantiellement le long d'un axe géométrique longitudinal (8) dans une direction de fermeture longitudinale (z)
· d'une position ouverte (O) dans laquelle la plaque de fermeture (4) dégage l'ouverture (2) à
· une position intermédiaire (I) dans laquelle la plaque de fermeture (4) recouvre l'ouverture (2) et le côté fermeture (5) se trouve dans une position opposée espacée du siège de soupape (3)
et
- par réglage de la tige de soupape qui existe au moins (6) substantiellement le long d'un axe géométrique transversal (9) à angle droit avec l'axe longitudinal (8) dans une direction de fermeture transversale (y)
· de la position intermédiaire (I) à
· une position de fermeture (C) dans laquelle le côté fermeture (5) de la plaque de fermeture (4) est appuyé substantiellement perpendiculairement au siège de soupape (3) et ferme l'ouverture (2) de manière substantiellement étanche au gaz
et en sens inverse et
• un boîtier de soupape (10) avec une zone de vide (11) dans laquelle l'ouverture (2), le siège de soupape (3) et la plaque de fermeture (4) sont placés, cependant que la tige de soupape qui existe au moins (6) traverse au moins un passage étanche au gaz (13) dans le boîtier de soupape (10) de la zone de vide (11) à une zone d'entraînement (12), qui se situe en dehors de la zone de vide (11), dans laquelle l'unité d'entraînement (7) est placée, en étant mobile le long de l'axe longitudinal (8) et de l'axe transversal (9),
caractérisée ne ce que
• la tige de soupape qui existe au moins (6) est reliée de manière rigide à une pièce déplaçable (14) de l'unité d'entraînement (7) qui est placée dans la zone d'entraînement (12),
• la pièce déplaçable (14) est guidée sans être pivotante parallèlement à l'axe longitudinal (8) et est déplaçable le long de l'axe longitudinal (8) au moyen d'un guidage (22) de l'unité d'entraînement (7) dans la zone d'entraînement (12)
- est guidée sans être pivotante parallèlement à l'axe longitudinal (8) et est déplaçable le long de l'axe longitudinal (8) entre une première position (PO) dans laquelle la plaque de fermeture (4) se trouve dans la position ouverte (O) et une seconde position (PI) dans laquelle la plaque de fermeture (4) se trouve dans la position intermédiaire (I), cependant que le guidage (22) bloque un autre déplacement de la pièce déplaçable (14) dans la direction de fermeture longitudinale (z) en atteignant la seconde position (PI) et
- est guidée sans être pivotante parallèlement à l'axe transversal (9) et est déplaçable le long de l'axe transversal (9) entre la seconde position (PI) et une troisième position (PC) dans laquelle la plaque de fermeture (4) se trouve dans la position de fermeture (C),
• l'unité d'entraînement (7) présente un actionneur linéaire (15) avec un organe de réglage (16) réglable linéairement parallèlement à l'axe longitudinal (8) et
• l'organe de réglage (16) est couplé mécaniquement à la pièce déplaçable (14) par une connexion oblique (17a ; 17b) de telle manière que
- l'organe de réglage (16) exerce, lors du déplacement linéaire dans la direction de fermeture longitudinale (z), une force orientée de manière oblique par rapport à la direction de fermeture longitudinale (z) sur la pièce déplaçable (14) avec des composantes de force dans la direction de fermeture longitudinale (z) et dans la direction de fermeture transversale (y) pour déplacer la pièce déplaçable (14) de la première position (PO) à la seconde position (PI) et de la seconde position (PI) à la troisième position (PC) et
- le déplacement de la pièce déplaçable (14) dans la direction de fermeture transversale (y) dans la troisième position (PC) se fait au moyen du déplacement linéaire de l'organe de réglage (16) dans la direction de fermeture longitudinale (z), la pièce déplaçable (14) étant bloquée dans la direction de fermeture longitudinale (z) dans la seconde position (PI).

2. Soupape à coulisse à vide selon la revendication 1, **caractérisée en ce que** le guidage présente un guidage à coulisse (22).

3. Soupape à coulisse à vide selon la revendication 2, **caractérisée en ce que** le guidage à coulisse (22) présente
• une pièce de guidage (23) qui est reliée au moyen d'un support pivotant (25) à la pièce déplaçable (14) de manière pivotante autour d'un axe géométrique de la pièce déplaçable (24) qui est à angle droit avec l'axe longitudinal (8) et qui est situé dans un plan avec lequel l'axe transversal (9) forme une normale géométrique,
• une première coulisse (28) dans laquelle un premier élément de guidage (26) de la pièce de guidage (23) est guidé et
• une seconde coulisse (29) dans laquelle un second élément de guidage (27) de la pièce de guidage (23) est guidé, les éléments de guidage (26, 27) étant décalés l'un par rapport à l'autre dans le sens de fermeture longitudinale (z) et les coulisses (28, 29) étant situées telles que l'axe de la pièce déplaçable (24) de la pièce déplaçable (14) est guidé de la première position (PO) à la seconde position (PI) parallèlement à l'axe longitudinal (8) et de la seconde position (PI) à la troisième position (PC) parallèlement à l'axe transversal (9).

4. Soupape à coulisse à vide selon la revendication 3, **caractérisée en ce que**
• la première coulisse (28) est située linéairement parallèlement à l'axe longitudinal (8),
• la seconde coulisse (29) se compose d'une section droite de coulisse (29a) et d'une section courbée de coulisse (29b),
• la section droite de coulisse (29a) se situe parallèlement à l'axe longitudinal (8) avec une extension linéaire qui correspond à l'extension linéaire de la première coulisse (28),
• la section courbée de coulisse (29b) s'étend substantiellement dans ou à l'encontre de la direction de fermeture transversale (y).

5. Soupape à coulisse à vide selon la revendication 4, **caractérisée en ce que** la section courbée de coulisse (29b) a la forme d'un segment d'arc d'une ellipse géométrique (30)
• dont le premier axe géométrique d'ellipse (30a) se situe sur la première coulisse et
• dont le second axe géométrique d'ellipse (30b) se situe sur une droite géométrique parallèle à l'axe transversal (9) et qui s'étend entre la seconde position (PI) et la troisième position (PC) de l'axe de la pièce déplaçable (24).

6. Soupape à coulisse à vide selon l'une des revendications 1 à 5, **caractérisée en ce que**
• la connexion oblique qui couple mécaniquement l'organe de réglage (16) à la pièce déplaçable (14) est formée par un guidage à surface oblique (17a) pour permettre un déplacement relatif entre l'organe de réglage (16) et la pièce déplaçable (14) le long d'un axe géométrique oblique (31) qui se situe en oblique par rapport à l'axe longitudinal (8) dans le plan dans lequel l'axe longitudinal (8) et l'axe transversal (9) se situent et
• l'axe géométrique oblique (31) se situe en oblique par rapport à l'axe longitudinal (8) de telle manière que la pièce déplaçable (14) est réglable au moyen du déplacement relatif de la seconde position (PI) à la troisième position (PC) par l'actionneur linéaire (15).

7. Soupape à coulisse à vide selon la revendication 6, **caractérisée en ce que** le guidage à surface oblique (17a) est formé par
• une surface oblique (33) tournée obliquement en direction contraire à la direction de fermeture transversale (y) et en direction contraire à la direction de fermeture longitudinale (z) sur la pièce déplaçable (14) et
• par des galets (34) qui sont placés sur l'organe de réglage (16), définissent une surface géométrique qui correspond à la surface oblique (33) et qui roulent sur la surface oblique (33) en direction le long de l'axe oblique (31).

8. Soupape à coulisse à vide selon la revendication 7, **caractérisée en ce que**
• la pièce déplaçable présente une surface de contre-dépouille (36) qui est tournée dans une direction opposée à la surface oblique (33) et
• l'organe de réglage (16) présente des galets de retour (35) qui roulent sur la surface de contre-dépouille (36) pour faire retourner la pièce déplaçable (14) de la troisième position (PC) à la seconde position (PI) - en particulier de la seconde position (PI) à la première position (PO) - par l'actionneur linéaire (15).

9. Soupape à coulisse à vide selon l'une des revendications 6 à 8, **caractérisée par** un entraîneur (39) qui agit entre la pièce déplaçable (14) et l'organe de réglage (16) qui est placé tel que le déplacement relatif lors du réglage de l'organe de réglage (16) de la troisième position (PC) à la seconde position (PI), qui se fait à l'encontre de la direction de fermeture longitudinale (y) par l'actionneur linéaire (15), est limité.

10. Soupape à coulisse à vide selon l'une des revendications 1 à 5, **caractérisée en ce que**
• la connexion oblique qui couple mécaniquement l'organe de réglage (16) à la pièce déplaçable (14) est formée par un guidage à parallélogramme (17b) avec au moins deux côtés placés parallèlement l'un à l'autre (37),
• les deux côtés qui existent au moins (37) sont reliés respectivement en étant pivotants autour d'axes des côtés (38a, 38b) à l'organe de réglage (16) et à la pièce déplaçable (14),
• les axes des côtés (38a, 38b) sont respectivement parallèles à un axe géométrique de la pièce déplaçable (24) qui est situé à angle droit avec l'axe longitudinal (8) et qui se situe dans un plan avec lequel l'axe transversal (9) forme une normale géométrique et
• les côtés (37) sont placés et dimensionnés tels qu'entre la première position (PO) et la seconde position (PI) l'axe de côté respectif (38a) sur la pièce déplaçable (14) dans la direction de fermeture longitudinale (z) est décalé par rapport à l'axe de côté respectif (38b) sur l'organe de réglage (16).

11. Soupape à coulisse à vide selon l'une des revendications 1 à 10, **caractérisée en ce que** l'organe de réglage (16) réglable de manière linéaire parallèlement à l'axe longitudinal (8) présente des galets d'appui (40) qui sont tournés en sens contraire à la direction de fermeture transversale (y) et qui roulent sur une voie de roulement (41) qui s'étend parallèlement à l'axe longitudinal (8), reliée au boîtier de soupape (10), pour l'appui de l'organe de réglage (16) sur le boîtier de soupape (10) dans la direction contraire à la direction de fermeture transversale (y).

12. Soupape à coulisse à vide selon l'une des revendications 1 à 11, **caractérisée en ce**
• **qu'**au moins une pièce d'appui (18) fait saillie de manière rigide à partir de la pièce déplaçable (14) en direction contraire à la direction de fermeture longitudinale (z), cependant qu'une extrémité libre (19) de la pièce d'appui (18), tournée en direction contraire à la direction de fermeture longitudinale (z), présente une surface de contact (20) tournée dans la direction de fermeture transversale (y),
• la pièce déplaçable (14) est placée entre la plaque de fermeture (4) et la surface de contact (20) - en particulier substantiellement au milieu - et
• la surface de contact (20) est située en face d'un appui (21) relié de manière rigide à la paroi de soupape (1) dans la seconde position (PI) et la troisième position (PC) de manière telle que l'extrémité libre (19) de la pièce d'appui (18) s'appuie, dans la position de fermeture (C), sur l'appui (21) dans la direction de fermeture transversale (y).

13. Soupape à coulisse à vide selon la revendication 12, **caractérisée en ce que** la pièce d'appui qui existe au moins (18) et la tige de soupape qui existe au moins (6) sont configurées en une pièce et la pièce d'appui qui existe au moins (18) est formée par une section de la tige de soupape qui existe au moins (6).

14. Soupape à coulisse à vide selon l'une des revendications 1 à 13, **caractérisée en ce que** l'actionneur linéaire (15) est configuré comme un entraînement à broche (15a).

15. Soupape à coulisse à vide selon l'une des revendications 1 à 13, **caractérisée en ce que** l'actionneur linéaire (15) est configuré comme une unité de cylindre et piston (15b).
